(19) Europäisches Patentamt
European Patent Office
Office européen des brevets

(11) EP 3 996 167 A1

# (12) EUROPEAN PATENT APPLICATION

published in accordance with Art. 153(4) EPC

(43) Date of publication:
**11.05.2022 Bulletin 2022/19**

(21) Application number: **20835587.5**

(22) Date of filing: **30.06.2020**

(51) International Patent Classification (IPC):
***H01M 4/13*** *(2010.01)* ***H01M 4/139*** *(2010.01)*
***H01M 4/62*** *(2006.01)* ***H01G 11/06*** *(2013.01)*
***H01G 11/38*** *(2013.01)* ***H01G 11/52*** *(2013.01)*

(52) Cooperative Patent Classification (CPC):
**H01G 11/06; H01G 11/38; H01G 11/52; H01M 4/13; H01M 4/139; H01M 4/62;** Y02E 60/10

(86) International application number:
**PCT/JP2020/025721**

(87) International publication number:
**WO 2021/002369 (07.01.2021 Gazette 2021/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.07.2019 JP 2019123210**

(71) Applicants:
- **Daikin Industries, Ltd.**
  **Osaka-shi, Osaka 530-8323 (JP)**
- **MCD Technologies S.a.r.l**
  **3364 Leudelange (LU)**

(72) Inventors:
- **SHINODA, Chihiro**
  **Osaka-shi, Osaka 530-8323 (JP)**
- **KITAHARA, Takahiro**
  **Osaka-shi, Osaka 530-8323 (JP)**
- **TERADA, Junpei**
  **Osaka-shi, Osaka 530-8323 (JP)**
- **PREDTECHENSKIY, Mikhail Rudolfovich**
  **Novosibirsk, 630090 (RU)**
- **BOBRENOK, Oleg Filippovich**
  **Novosibirsk, 630090 (RU)**

(74) Representative: **Hoffmann Eitle**
**Patent- und Rechtsanwälte PartmbB**
**Arabellastraße 30**
**81925 München (DE)**

## (54) COMPOSITION FOR ELECTROCHEMICAL DEVICE, POSITIVE ELECTRODE MIXTURE, POSITIVE ELECTRODE STRUCTURE, AND SECONDARY BATTERY

(57) Provided is a composition for an electrochemical device, the composition comprising a single-walled carbon nanotube, a binder, and a solvent, wherein the binder contains a fluorine-containing copolymer containing a vinylidene fluoride unit and a fluorinated monomer unit other than the vinylidene fluoride unit, and the content of the vinylidene fluoride unit in the fluorine-containing copolymer is 50.0 mol% or more relative to total monomer units.

EP 3 996 167 A1

## Description

TECHNICAL FIELD

The present disclosure relates to a composition for an electrochemical device, a positive electrode mixture, a positive electrode structure, and a secondary battery.

BACKGROUND ART

Secondary batteries such as lithium-ion secondary batteries offer advantages such as high voltage, high energy density, low self-discharge, small memory effect, and potential to be ultra-lightweight; therefore, secondary batteries are used in electrical or electronic devices small enough to be portable such as laptop computers, mobile phones, smartphones, tablet computers, and ultrabooks, and are also being put into practical use for a wide variety of power sources ranging from invehicle driving power sources such as those for automobiles to stationary large-scale power sources.

For example, Patent Document 1 describes a secondary battery including a positive electrode, a negative electrode, and an electrolyte solution, wherein: the negative electrode contains a first negative electrode active material, a second negative electrode active material, and a negative electrode binder; the first negative electrode active material has a core portion containing a material containing silicon (Si) as a constituent element and a cover portion provided on a surface of the core portion and containing a salt compound and an electrically conductive substance; the salt compound contains at least one of a polyacrylic acid salt and a carboxymethyl cellulose salt; the electrically conductive substance contains at least one of a carbon material and a metal material; the second negative electrode active material contains a material containing carbon (C) as a constituent element; and the negative electrode binder contains at least one of polyvinylidene fluoride, polyimide, and aramid. Further, Patent Document 1 mentions single-walled carbon nanotubes as an example of the carbon material.

Patent Document 2 describes a metal foil having a surface provided with a conductive layer comprising carbon nanotubes, characterized in that the conductive layer is applied so that the carbon nanotubes are arranged on the foil surface randomly and in an amount of 100 ng/$cm^2$-10 $\mu$g/$cm^2$.

RELATED ART

PATENT DOCUMENTS

Patent Document 1: International Publication No. WO 2018/146865
Patent Document 2: Publication of the European patent application No. EP 3147919

SUMMARY OF THE INVENTION

PROBLEM TO BE SOLVED BY THE INVENTION

It is an object of the present disclosure to provide a composition for an electrochemical device, the use of which allows obtaining an electrode mixture resistant to viscosity increase even a long time after preparation and further allows forming a low-resistance electrode mixture layer and forming an electrode mixture layer superior both in adhesion to current collector and in flexibility and resistant to spring-back.

MEANS FOR SOLVING THE PROBLEM

The present disclosure provides a composition for an electrochemical device, the composition comprising a single-walled carbon nanotube, a binder, and a solvent, wherein the binder contains a fluorine-containing copolymer containing a vinylidene fluoride unit and a fluorinated monomer unit other than the vinylidene fluoride unit, and the content of the vinylidene fluoride unit in the fluorine-containing copolymer is 50.0 mol% or more relative to total monomer units.

It is preferable that the average outer diameter of the single-walled carbon nanotube be 2.5 nm or less.

It is preferable that the average G/D ratio of the single-walled carbon nanotube be 2 or more.

It is preferable that the content of the fluorinated monomer unit in the fluorine-containing copolymer be 1.0 mol% or more relative to total monomer units.

It is preferable that the fluorinated monomer unit be at least one selected from the group consisting of a tetrafluoroethylene unit, a chlorotrifluoroethylene unit, a fluoroalkyl vinyl ether unit and a hexafluoropropylene unit.

It is more preferable that the fluorinated monomer unit be at least one selected from the group consisting of a tetrafluoroethylene unit and a hexafluoropropylene unit.
It is preferable that the storage elastic modulus (E') as determined by a viscoelasticity analysis at 30°C of the fluorine-containing copolymer is 100 to 1200 MPa and the storage elastic modulus (E') as determined by a viscoelasticity analysis of the fluorine-containing copolymer at 60°C is 50 to 600 MPa.
It is preferable that the binder further contain a polyvinylidene fluoride.
It is preferable that the solvent be at least one selected from the group consisting of N,N-dimethylformamide, N,N-dimethylacetamide, N-methyl-2-pyrrolidone, N-ethyl-2-pyrrolidone, and β-alkoxypropionamides.
The composition for an electrochemical device according to the present disclosure can be suitably used to form an electrode or a separator of an electrochemical device.
The present disclosure also provides a positive electrode mixture comprising the above composition for an electrochemical device and a positive electrode active material.
It is preferable that the content of the single-walled carbon nanotube in the positive electrode mixture be 0.001 to 10 parts by mass relative to 100 parts by mass of the positive electrode active material.
It is preferable that the content of the binder in the positive electrode mixture be 0.1 to 5.0 parts by mass relative to 100 parts by mass of the positive electrode active material.
The present disclosure also provides a positive electrode structure comprising a current collector and a positive electrode mixture layer provided on one or both sides of the current collector, the positive electrode mixture layer being made of the above positive electrode mixture.
The present disclosure also provides a secondary battery comprising the above positive electrode structure.

## EFFECTS OF INVENTION

The present disclosure can provide a composition for an electrochemical device, the use of which allows obtaining an electrode mixture resistant to viscosity increase even a long time after preparation and further allows forming a low-resistance electrode mixture layer and forming an electrode mixture layer superior both in adhesion to current collector and in flexibility and resistant to spring-back.

## DESCRIPTION OF EMBODIMENTS

Hereinafter, specific embodiments of the present disclosure will be described in detail. The present disclosure is not limited to the embodiments described below.

### Composition for Electrochemical Device

The composition for an electrochemical device according to the present disclosure comprises a single-walled carbon nanotube, a binder, and a solvent.

### Single-Walled Carbon Nanotube

The composition for an electrochemical device according to the present disclosure comprises a single-walled carbon nanotube. Single-walled carbon nanotubes (SWCNTs) are a special type of carbon materials that are known as a one-dimensional material. A single-walled carbon nanotube consists of a sheet of graphene, which is rolled in the form of a hollow tube having a wall with one-atom thickness. Due to having such a chemical structure and size, the single-walled carbon nanotube exhibits superior mechanical, electrical, thermal, and optical properties. Since the composition for an electrochemical device according to the present disclosure comprises the single-walled carbon nanotube, the use of the composition for an electrochemical device according to the present disclosure in preparation of an electrode mixture and the use of the resulting electrode mixture in formation of an electrode mixture layer allow the formed electrode mixture layer to have a low resistance. Thus, when an electrode mixture layer having the same resistance as a conventional electrode mixture layer is formed, a decrease in the total amount of a conductive additive such as acetylene black and an increase in the amount of an active material are made possible, and an electrochemical device having a high energy density can therefore be provided. Further, the use of the single-walled carbon nanotube with a specific copolymer as described later can ensure both the adhesion between an electrode mixture layer and a current collector and the flexibility of an electrode structure comprising the electrode mixture layer and the current collector.
Additionally, an electrode mixture layer obtained using the composition for an electrochemical device according to the present disclosure offers the advantage of being resistant to spring-back. When an electrode to be included in an electrochemical device is formed, the electrode may be subjected to pressing in order to flatten the electrode or increase the electrode density, and the pressing may be followed by heat treatment. Conventional techniques have a problem in

that heat treatment subsequent to removal of a pressing load for pressing causes a phenomenon called spring-back, in which the electrode undergoes an increase in thickness or a decrease in electrode density. The use of the single-walled carbon nanotube with a specific copolymer as described later can effectively prevent the spring-back.

Further, with the use of the composition for an electrochemical device according to the present disclosure, a battery superior in output characteristic, cycle characteristic, and 60°C storage characteristic can be obtained.

The average outer diameter of the single-walled carbon nanotube is preferably 1.0 to 2.5 nm, more preferably 1.1 to 2.0 nm, and even more preferably 1.2 to 1.8 nm. The average outer diameter of the single-walled carbon nanotube can be determined from an optical absorption spectrum obtained for the single-walled carbon nanotube by ultraviolet-visible-near-infrared spectroscopy (UV-Vis-NIR), from a Raman spectrum of the single-walled carbon nanotube, or from a transmission electron microscope (TEM) image of the single-walled carbon nanotube.

The average length of the single-walled carbon nanotube is preferably 0.1 to 50 μm, more preferably 0.5 to 20 μm, and even more preferably 1 to 10 μm. The average length of the single-walled carbon nanotube can be determined by obtaining an atomic force microscope (AFM) image of the single-walled carbon nanotubes with an AFM or obtaining a transmission electron microscope (TEM) image of the single-walled carbon nanotubes with a TEM to measure the length of each single-walled carbon nanotube and dividing the sum of the lengths by the number of the single-walled carbon nanotubes subjected to the measurement.

The average G/D ratio of the single-walled carbon nanotube, as measured by Raman spectroscopy (wavelength: 532 nm), is preferably 2 to 250, more preferably 5 to 250, even more preferably 10 to 220, and particularly preferably 40 to 180. The G/D ratio refers to the intensity ratio between the G band and D band (G/D) in a Raman spectrum of the single-walled carbon nanotube. A higher average G/D ratio of the single-walled carbon nanotube indicates a higher crystallinity of the single-walled carbon nanotube and a smaller amount of impurity carbon and defective carbon nanotube.

The content of the single-walled carbon nanotube in the composition for an electrochemical device according to the present disclosure is preferably 0.01 to 3 mass%, more preferably 0.01 to 2 mass%, even more preferably 0.01 to 1 mass%, particularly preferably 0.1 to 0.8 mass%, and most preferably 0.2 to 0.5 mass% relative to the mass of the composition. When the content of the single-walled carbon nanotube is within the above range, the composition for an electrochemical device has an appropriate level of viscosity, and an electrode mixture in which the components are well-dispersed can be prepared without applying an extremely strong shear force. Thus, a three-dimensional network of the single-walled carbon nanotubes is well-formed in the resulting electrode mixture layer, and an electrode mixture layer having a lower resistance can be obtained.

Binder

The composition for an electrochemical device according to the present disclosure contains a fluorine-containing copolymer as a binder, the fluorine-containing copolymer containing a vinylidene fluoride unit and a fluorinated monomer unit other than the vinylidene fluoride unit. Thanks to the inclusion of the fluorine-containing copolymer, the composition for an electrochemical device according to the present disclosure can be used to prepare an electrode mixture resistant to viscosity increase even a long time after preparation. In particular, even when the composition for an electrochemical device according to the present disclosure is mixed with a positive electrode active material having a high Ni content, the resulting positive electrode mixture is resistant to viscosity increase. Further, since the composition for an electrochemical device according to the present disclosure comprises the above fluorine-containing copolymer in combination with the single-walled carbon nanotube, the composition for an electrochemical device according to the present disclosure can be used to prepare an electrode mixture, the use of which in formation of an electrode mixture layer makes it possible to achieve both high adhesion between the electrode mixture layer and a current collector and high flexibility of an electrode structure and also effectively prevent the spring-back of the electrode mixture layer.

It is preferable that the fluorine-containing copolymer be a fluororesin. The fluororesin refers to a partially crystalline fluoropolymer, which is a fluoroplastic rather than a fluoroelastomer. The fluororesin has a melting point and thermoplasticity and may be melt-fabricable or non melt-processible. It is preferable that the fluororesin be a melt-fabricable fluororesin.

It is preferable that the fluorinated monomer (except VdF) be at least one selected from the group consisting of tetrafluoroethylene (TFE), vinyl fluoride, trifluoroethylene, chlorotrifluoroethylene (CTFE), fluoroalkyl vinyl ether, hexafluoropropylene (HFP), (perfluoroalkyl)ethylene, 2,3,3,3-tetrafluoropropene, and trans-1,3,3,3-tetrafluoropropene, in order to enable further reduction in the viscosity increase of an electrode mixture and enable formation of an electrode mixture layer more superior in adhesion to current collector and flexibility and more resistant to the spring-back. More preferred is at least one selected from the group consisting of TFE, CTFE, fluoroalkyl vinyl ether, and HFP, and even more preferred is at least one selected from the group consisting of TFE, fluoroalkyl vinyl ether, and HFP, and particularly preferred is at least one selected from the group consisting of TFE and HFP. TFE is most preferred in order to reduce swelling of the electrode mixture layer with an electrolyte solution and enable improvement in the battery characteristics such as output characteristic, cycle characteristic, and low resistivity.

The fluorinated monomer unit (except the VdF unit) may or may not have a polar group.

Examples of the fluoroalkyl vinyl ether (FAVE) include at least one selected from the group consisting of a monomer represented by the following formula:

$$CF_2=CFO(CF_2CFX^1O)_p-(CF_2CF_2CF_2O)_q-Rf^1$$

wherein $X^1$ is F or $CF_3$; $Rf^1$ is a perfluoroalkyl group having 1 to 5 carbon atoms; p is an integer of 0 to 5; and q is an integer of 0 to 5; and a monomer represented by the following formula:

$$CFX^2=CX^2OCF_2ORf^2$$

wherein $X^2$ are the same or different and each is H, F or $CF_3$; $Rf^2$ is a fluoroalkyl group having 1 to 6 carbon atoms which may have 1 to 2 atoms selected from the group consisting of H, Cl, Br, and I and which may be straight or branched, or a cyclic fluoroalkyl group having 5 or 6 carbon atoms which may have 1 to 2 atoms selected from the group consisting of H, Cl, Br, and I.

Preferred as FAVE is at least one selected from the group consisting of perfluoro(methyl vinyl ether) (PMVE), perfluoro(ethyl vinyl ether) (PEVE), and perfluoro(propyl vinyl ether) (PPVE).

The content of the VdF unit in the fluorine-containing copolymer is 50.0 mol% or more relative to total monomer units. In order to enable further reduction in the viscosity increase of an electrode mixture and enable formation of an electrode mixture layer having lower resistance, more superior in adhesion to current collector and flexibility, and more resistant to the spring-back, the content of the VdF unit is preferably 55.0 mol% or more and more preferably 60.0 mol% or more and is preferably 99.0 mol% or less, more preferably 97.0 mol% or less, even more preferably 95.0 mol% or less and particularly preferably 90.0 mol% or less.

In order to enable further reduction in the viscosity increase of an electrode mixture and enable formation of an electrode mixture layer having lower resistance, more superior in adhesion to current collector and flexibility, and more resistant to the spring-back, the content of the fluorinated monomer unit (except the VdF unit) in the fluorine-containing copolymer is preferably 1.0 mol% or more, more preferably 2.5 mol% or more, even more preferably 5.0 mol% or more, particularly preferably 8.0 mol% or more and most preferably 10.0 mol% or more, and is preferably 50.0 mol% or less, more preferably 49.5 mol% or less, even more preferably 45.0 mol% or less, and particularly preferably 40.0 mol% or less relative to total monomer units.

In the present specification, the compositional features of the fluorine-containing copolymer can be measured, for example, by $^{19}$F-NMR spectroscopy.

The fluorine-containing copolymer may further contain a non-fluorinated monomer unit. Examples of the non-fluorinated monomer include non-fluorinated monomers having no polar group, such as ethylene and propylene, and non-fluorinated monomers having a polar group (such a monomer may be referred to as "polar group-containing monomer" hereinafter).

When a non-fluorinated monomer having a polar group is used, the polar group is introduced into the fluorine-containing copolymer, and thus higher adhesion between an electrode mixture layer and a current collector can be achieved. Preferred as the polar group that the fluorine-containing copolymer can have is at least one selected from the group consisting of a carbonyl-containing group, an epoxy group, a hydroxy group, a sulfonic acid group, a sulfuric acid group, a phosphoric acid group, an amino group, an amide group, and an alkoxy group. More preferred is at least one selected from the group consisting of a carbonyl-containing group, an epoxy group, and a hydroxy group, and even more preferred is a carbonyl-containing group. The hydroxy group is other than a hydroxy group constituting part of the carbonyl-containing group. The amino group is a monovalent functional group resulting from removal of hydrogen from ammonia or from a primary or secondary amine.

The carbonyl-containing group is a functional group having a carbonyl group (-C(=O)-). In order to achieve higher adhesion between an electrode mixture layer and a current collector, it is preferable that the carbonyl-containing group be a group represented by the formula -COOR, wherein R is a hydrogen atom, an alkyl group, or a hydroxyalkyl group, or a carboxylic anhydride group. More preferred is a group represented by the formula -COOR. The number of carbon atoms in the alkyl group and hydroxyalkyl group is preferably 1 to 16, more preferably 1 to 6, and even more preferably 1 to 3. Specific examples of the group represented by the formula -COOR include $-COOCH_2CH_2OH$, $-COOCH_2CH(CH_3)OH$, $-COOCH(CH_3)CH_2OH$, -COOH, $-COOCH_3$, and $-COOC_2H_5$. When the group represented by the formula -COOR is or contains - COOH, the group -COOH may be a carboxylic acid salt group such as a carboxylic acid metal salt group or a carboxylic acid ammonium salt group.

Preferred as the amide group is a group represented by the formula -CO-NRR', wherein R and R' are each independently a hydrogen atom or a substituted or unsubstituted alkyl group, or a bond represented by the formula -CO-NR"-, wherein R" is a hydrogen atom, a substituted or unsubstituted alkyl group, or a substituted or unsubstituted phenyl group.

Examples of the polar group-containing monomer include: hydroxyalkyl (meth)acrylates such as hydroxyethyl acrylate and 2-hydroxypropyl acrylate; unsaturated dibasic acids such as maleic acid, maleic anhydride, citraconic acid, and citraconic anhydride; alkylidene malonic acid esters such as dimethyl methylidenemalonate; vinyl carboxyalkyl ethers such as vinyl carboxymethyl ether and vinyl carboxyethyl ether; carboxyalkyl (meth)acrylates such as 2-carboxyethyl acrylate and 2-carboxyethyl methacrylate; (meth)acryloyloxyalkyldicarboxylic acid esters such as acryloyloxyethyl succinate, methacryloyloxyethyl succinate, acryloyloxyethyl phthalate, and methacryloyloxyethyl phthalate; and unsaturated dibasic acid monoesters such as monomethyl maleate, monoethyl maleate, monomethyl citraconate, and monoethyl citraconate; and a monomer (2) represented by the following formula (2):

[Formula 1]

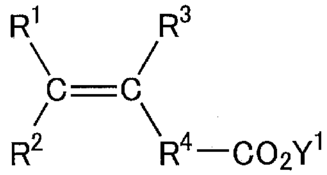

wherein: $R^1$ to $R^3$ are each independently a hydrogen atom, a chlorine atom, or a hydrocarbon group having 1 to 8 carbon atoms; $R^4$ is a single bond, a hydrocarbon group having 1 to 8 carbon atoms, a heteroatom, or an atomic group having a molecular weight of 500 or less, the atomic group containing at least one heteroatom selected from the group consisting of an oxygen atom, a sulfur atom, a nitrogen atom, and a phosphorus atom and containing a main chain having 1 to 20 atoms; and $Y^1$ is an inorganic cation and/or organic cation. In the present disclosure, "(meth)acrylic acid" refers to either acrylic acid or methacrylic acid. The prefix "(meth)" used in other compound names should be interpreted in the same manner. The number of atoms in the main chain of the atomic group refers to the number of atoms in the linear skeleton and does not include the number of oxygen atoms constituting a carbonyl group or the number of hydrogen atoms constituting a methylene group. For example, when the monomer (2) is acryloyloxyethyl phthalate, the linear skeleton is -C-OCCO-C-CC-, the number of atoms in which is 8.

It is preferable that the fluorine-containing copolymer contain, as the unit derived from the polar group-containing monomer, a unit derived from the monomer (2) represented by the formula (2), in order to enable formation of an electrode mixture layer more superior in adhesion to current collector and flexibility and more resistant to the spring-back.

In the formula (2), $Y^1$ is an inorganic cation and/or organic cation. Examples of the inorganic cation include cations such as H, Li, Na, K, Mg, Ca, Al, and Fe. Examples of the organic cation include cations such as $NH_4$, $NH_3R^5$, $NH_2R^5{}_2$, $NHR^5{}_3$, and $NR^5{}_4$, wherein $R^5$ are each independently an alkyl group having 1 to 4 carbon atoms. Preferred as $Y^1$ are H, Li, Na, K, Mg, Ca, Al, and $NH_4$. More preferred are H, Li, Na, K, Mg, Al, and $NH_4$, even more preferred are H, Li, Al, and $NH_4$, and particularly preferred is H. It should be noted that the specific examples of the inorganic cation and organic cation are presented with omission of the sign and valence for convenience.

In the formula (2), $R^1$ to $R^3$ are each independently a hydrogen atom, a chlorine atom, or a hydrocarbon group having 1 to 8 carbon atoms. The hydrocarbon group is a monovalent hydrocarbon group. It is preferable that the number of carbon atoms in the hydrocarbon group be 4 or less. Examples of the hydrocarbon group include alkyl, alkenyl, and alkynyl groups having the specified number of carbon atoms, and a methyl group or ethyl group is preferred. It is preferable that $R^1$ and $R^2$ be each independently a hydrogen atom, a methyl group, or an ethyl group, and it is preferable that $R^3$ be a hydrogen atom or a methyl group.

In the formula (2), $R^4$ is a single bond, a hydrocarbon group having 1 to 8 carbon atoms, a heteroatom, or an atomic group having a molecular weight of 500 or less, the atomic group containing at least one heteroatom selected from the group consisting of an oxygen atom, a sulfur atom, a nitrogen atom, and a phosphorus atom and containing a main chain having 1 to 20 atoms.

The hydrocarbon group is a divalent hydrocarbon group. It is preferable that the number of carbon atoms in the hydrocarbon group be 4 or less. Examples of the hydrocarbon group include alkylene and alkenylene groups having the specified number of carbon atoms, among which at least one selected from the group consisting of a methylene group, an ethylene group, an ethylidene group, a propylidene group, and an isopropylidene group is preferred, and at least one selected from the group consisting of a methylene group and an ethylene group is more preferred.

When $R^4$ is a heteroatom, it is preferable that the heteroatom be at least one selected from the group consisting of an oxygen atom, a sulfur atom, a nitrogen atom, and a phosphorus atom, among which an oxygen atom is more preferred.

When $R^4$ is an atomic group, it is preferable that the heteroatom in the atomic group be an oxygen atom.

When $R^4$ is an atomic group, it is preferable that the side chain represented by the formula $-R^4-CO_2Y^1$ in the formula (2) be any of the following side chains.

A side chain represented by the formula $-CO-R^6-CO_2Y^1$, wherein $R^6$ is an atomic group having a molecular weight of 472 or less and containing a main chain having 1 to 19 atoms, and $Y^1$ is as defined above.

A side chain represented by the formula $-O-R^7-CO_2Y^1$, wherein $R^7$ is an atomic group having a molecular weight of 484 or less and containing a main chain having 1 to 19 atoms, and $Y^1$ is as defined above.

A side chain represented by the formula $-COO-R^8-CO_2Y^1$, wherein $R^8$ is an atomic group having a molecular weight of 456 or less and containing a main chain having 1 to 18 atoms, and $Y^1$ is as defined above.

When $R^4$ is an atomic group, examples of the monomer (2) include: (meth)acrylamide compounds such as N-carboxyethyl(meth)acrylamide; thio(meth)acrylate compounds such as carboxyethyl thio(meth)acrylate; vinyl carboxyalkyl ethers such as vinyl carboxymethyl ether and vinyl carboxyethyl ether; and other compounds such as 2-carboxyethyl acrylate, 2-carboxyethyl methacrylate, acryloyloxyethyl succinate, methacryloyloxyethyl succinate, acryloyloxypropyl succinate, methacryloyloxypropyl succinate, acryloyloxyethyl phthalate, and methacryloyloxyethyl phthalate. When $R^4$ is an atomic group, it is preferable that the monomer (2) be 2-carboxyethyl acrylate, 2-carboxyethyl methacrylate, acryloyloxyethyl succinate, methacryloyloxyethyl succinate, acryloyloxypropyl succinate, or methacryloyloxypropyl succinate.

In order to enable formation of an electrode mixture layer more superior in adhesion to current collector and flexibility and more resistant to the spring-back, it is preferable that the monomer (2) be a monomer (2) represented by the formula (2) wherein $R^4$ is a single bond or a hydrocarbon group having 1 to 8 carbon atoms.

In order to enable formation of an electrode mixture layer more superior in adhesion to current collector and flexibility and more resistant to the spring-back, it is more preferable that the monomer (2) be at least one selected from the group consisting of (meth)acrylic acid, salts thereof, vinylacetic acid (3-butenoic acid), salts thereof, 3-pentenoic acid, salts thereof, 4-pentenoic acid, salts thereof, 3-hexenoic acid, salts thereof, 4-heptenoic acid, salts thereof, 5-hexenoic acid, and salts thereof, and even more preferred is at least one selected from the group consisting of 3-butenoic acid, salts thereof, 4-pentenoic acid, and salts thereof.

In order to enable further reduction in the viscosity increase of an electrode mixture and enable formation of an electrode mixture layer having lower resistance, more superior in adhesion to current collector and flexibility, and more resistant to the spring-back, the content of the polar group-containing monomer unit in the fluorine-containing copolymer is preferably 0.05 to 2.0 mol%, more preferably 0.10 mol% or more, even more preferably 0.25 mol% or more, and particularly preferably 0.40 mol% or more and is more preferably 1.5 mol% or less, relative to total monomer units.

In the present specification, the content of the polar group-containing monomer unit in the fluorine-containing copolymer can, for example, when the polar group is an acid group such as that derived from a carboxylic acid, be measured by acid-base titration of the acid group.

Examples of the fluorine-containing copolymer include VdF/TFE copolymer, VdF/HFP copolymer, VdF/TFE/HFP copolymer, VdF/TFE/(meth)acrylic acid copolymer, VdF/HFP/(meth)acrylic acid copolymer, VdF/CTFE copolymer, VdF/TFE/4-pentenoic acid copolymer, VdF/TFE/3-butenoic acid copolymer, VdF/TFE/HFP/(meth)acrylic acid copolymer, VdF/TFE/HFP/4-pentenoic acid copolymer, VdF/TFE/HFP/3-butenoic acid copolymer, VdF/FAVE copolymer, VdF/FAVE/(meth)acrylic acid copolymer, VdF/FAVE/carboxyalkyl (meth)acrylate copolymer, and VdF/HFP/carboxyalkyl (meth)acrylate copolymer.

It is preferable that the fluorine-containing copolymer be at least one selected from the group consisting of a copolymer containing VdF unit and TFE unit, a copolymer containing VdF unit and HFP unit, and a copolymer containing VdF unit and FAVE unit.

Among these, a preferred fluorine-containing copolymer is a fluorine-containing copolymer consisting of VdF unit, TFE unit, and any non-fluorinated monomer unit and having a molar ratio between VdF unit and TFE unit (VdF unit/TFE unit) of 50/50 to 90/10. That is, it is preferable that the fluorine-containing copolymer be a binary copolymer consisting of VdF unit and TFE unit or a ternary or multi-component copolymer consisting of VdF unit, TFE unit, and one or more non-fluorinated monomer units and contain no fluorinated monomer unit other than VdF unit and TFE unit. The inclusion of such a fluorine-containing copolymer in the composition for an electrochemical device according to the present disclosure makes it possible to enable further reduction in the viscosity increase of an electrode mixture and enable formation of an electrode mixture layer having lower resistance, more superior in adhesion to current collector and flexibility, and more resistant to the spring-back.

When the fluorine-containing copolymer contains VdF unit and TFE unit, the molar ratio between VdF unit and TFE unit (VdF unit/TFE unit) is preferably 50/50 to 90/10, more preferably 55/45 to 89/11, and even more preferably 60/40 to 88/12.

When the fluorine-containing copolymer contains VdF unit and TFE unit, the content of the non-fluorinated monomer unit is preferably 0 to 2.0 mol%, relative to total monomer units of the fluorine-containing copolymer.

Especially, preferred as the non-fluorinated monomer is a polar group-containing monomer, more preferred is a monomer (2), even more preferred is at least one selected from the group consisting of (meth)acrylic acid, salts thereof, vinylacetic acid (3-butenoic acid), salts thereof, 3-pentenoic acid, salts thereof, 4-pentenoic acid, salts thereof, 3-hexenoic acid, salts thereof, 4-heptenoic acid, salts thereof, 5-hexenoic acid, and salts thereof, and particularly preferred is at least one selected from the group consisting of 3-butenoic acid, salts thereof, 4-pentenoic acid, and salts thereof.

It is preferable that the fluorine-containing copolymer consisting of VdF unit, TFE unit and any non-fluorinated monomer unit be a VdF/TFE copolymer, VdF/TFE/HFP copolymer, VdF/TFE/(meth)acrylic acid copolymer, VdF/TFE/4-pentenoic acid copolymer, VdF/TFE/3-butenoic acid copolymer, VdF/TFE/HFP/(meth)acrylic acid copolymer, VdF/TFE/HFP/4-pentenoic acid copolymer, and VdF/TFE/HFP/3-butenoic acid copolymer.

The fluorine-containing copolymer may be VdF/HFP copolymer. VdF/HFP copolymer contains VdF unit and HFP unit. The content of the VdF unit is preferably 55.0 mol% or more, more preferably 60.0 mol% or more, even more preferably 80.0 mol% or more, particularly preferably 90.0 mol% or more, and is preferably 99.0 mol% or less, and more preferably 97.0 mol% or less, relative to total monomer units of VdF/HFP copolymer. The content of the HFP unit is preferably 1.0 mol% or more, more preferably 3.0 mol% or more, and is preferably 45.0 mol% or less, more preferably 40.0 mol% or less, even more preferably 20.0 mol% or less, and particularly preferably 10.0 mol% or less, relative to total monomer units of VdF/HFP copolymer.

In addition to VdF unit and HFP unit, VdF/HFP copolymer may contain a unit derived from a monomer copolymerizable with VdF and HFP (except VdF and HFP). The content of the unit derived from the monomer copolymerizable with VdF and HFP is preferably 0 to 2.0 mol%, more preferably 0.05 to 2.0 mol%, relative to total monomer units of VdF/HFP copolymer.

Examples of the monomer copolymerizable with VdF and HFP include the fluorinated monomer described above and the non-fluorinated monomer. Especially, preferred as the monomer copolymerizable with VdF and HFP is at least one selected from the group consisting of a fluorinated monomer and a polar group-containing monomer, more preferred is at least one selected from the group consisting of TFE, 2,3,3,3-tetrafluoropropene and a monomer (2), even more preferred is a monomer (2).

The fluorine-containing copolymer may be VdF/FAVE copolymer. VdF/FAVE copolymer contains VdF unit and FAVE unit. The content of the VdF unit is preferably 55.0 mol% or more, more preferably 70.0 mol% or more, even more preferably 90.0 mol% or more, particularly preferably 95.0 mol% or more, and is preferably 99.0 mol% or less, and more preferably 98.5 mol% or less, relative to total monomer units of VdF/FAVE copolymer. The content of the FAVE unit is preferably 1.0 mol% or more, more preferably 1.5 mol% or more, and is preferably 45.0 mol% or less, more preferably 30.0 mol% or less, even more preferably 10.0 mol% or less, and particularly preferably 5.0 mol% or less, relative to total monomer units of VdF/FAVE copolymer.

Preferred as FAVE is perfluoro(methyl vinyl ether) (PMVE), perfluoro(ethyl vinyl ether) (PEVE), perfluoro(propyl vinyl ether) (PPVE).

In addition to VdF unit and FAVE unit, VdF/FAVE copolymer may contain a unit derived from a monomer copolymerizable with VdF and FAVE (except VdF and FAVE). The content of the unit derived from the monomer copolymerizable with VdF and FAVE is preferably 0 to 2.0 mol%, more preferably 0.05 to 2.0 mol%, relative to total monomer units of VdF/FAVE copolymer.

Examples of the monomer copolymerizable with VdF and FAVE include the fluorinated monomer described above and the non-fluorinated monomer. Especially, preferred as the monomer copolymerizable with VdF and FAVE is at least one selected from the group consisting of a fluorinated monomer and a polar group-containing monomer, more preferred is a polar group-containing monomer, even more preferred is at least one selected from the group consisting of (meth)acrylic acid, salts thereof, carboxyalkyl (meth)acrylate, and salts thereof.

The weight-average molecular weight (polystyrene equivalent) of the fluorine-containing copolymer is preferably 160000 to 2760000, more preferably 200000 to 2530000, and even more preferably 300000 to 2000000. The weight-average molecular weight can be measured by gel permeation chromatography (GPC) using dimethylformamide as a solvent.

The number-average molecular weight (polystyrene equivalent) of the fluorine-containing copolymer is preferably 70000 to 1200000 and more preferably 140000 to 1100000. The number-average molecular weight can be measured by gel permeation chromatography (GPC) using dimethylformamide as a solvent.

The melting point of the fluorine-containing copolymer is preferably 100 to 200°C. The melting point can be measured using a differential scanning calorimetry (DSC) apparatus and determined as a temperature at which a heat-of-fusion curve obtained during heating at a rate of 10°C/min shows a maximum.

The average particle size of the fluorine-containing copolymer is preferably 1000 μm or less and more preferably 50 to 350 μm in order to enable easy dissolution or dispersion of the fluorine-containing copolymer in a solvent.

The fluorine-containing copolymer preferably has the storage elastic modulus (E') at 30°C of 100 to 1200 MPa and has the storage elastic modulus (E') at 60°C of 50 to 600 MPa.

The storage elastic modulus (E') at 30°C of the fluorine-containing copolymer is more preferably 150 MPa or more, even more preferably 200 MPa or more, more preferably 800 MPa or less, even more preferably 600 MPa or less.

The storage elastic modulus (E') at 60°C of the fluorine-containing copolymer is more preferably 80 MPa or more, even more preferably 130 MPa or more, more preferably 450 MPa or less, even more preferably 350 MPa or less.

When the storage elastic modulus (E') of the fluorine-containing copolymer is within the above range, an electrode mixture layer which is more excellent in flexibility can be formed.

The storage elastic modulus (E') is a value determined by a dynamic viscoelasticity analysis of a sample with a length of 30 mm, a width of 5 mm, and a thickness of 50 to 100 μm at 30°C and 60°C using a dynamic viscoelasticity analyzer DVA 220 manufactured by IT keisoku seigyo sya in a tensile mode using a supporting span of 20 mm at a temperature increase rate of 2°C/min from -30°C to 160°C at 1 Hz.

It is preferable that the composition for an electrochemical device according to the present disclosure further contain a polyvinylidene fluoride (PVdF) in order to enable formation of an electrode mixture layer more superior in adhesion to current collector and flexibility and more resistant to the spring-back. In particular, when the composition for an electrochemical device according to the present disclosure further contains PVdF, an electrode mixture layer having lower resistance can be formed.

The polyvinylidene fluoride (PVdF) is a polymer containing a unit derived from vinylidene fluoride (VdF) (this unit will be referred to as VdF unit hereinafter) and may be a VdF homopolymer consisting of VdF unit or a polymer containing VdF unit and a unit derived from a monomer copolymerizable with VdF.

For the PVdF, it is preferable that the monomer copolymerizable with VdF be a monomer other than tetrafluoroethylene (TFE). That is, it is preferable that the PVdF should not contain TFE unit.

For the PVdF, examples of the monomer copolymerizable with VdF include a fluorinated monomer and a non-fluorinated monomer, and a fluorinated monomer is preferred. Examples of the fluorinated monomer include vinyl fluoride, trifluoroethylene, chlorotrifluoroethylene (CTFE), fluoroalkyl vinyl ether, hexafluoropropylene (HFP), (perfluoroalkyl)ethylene, 2,3,3,3-tetrafluoropropene, and trans-1,3,3,3-tetrafluoropropene. Examples of the non-fluorinated monomer include ethylene and propylene.

For the PVdF, it is preferable that the monomer copolymerizable with VdF be at least one fluorinated monomer selected from the group consisting of CTFE, fluoroalkyl vinyl ether, HFP, and 2,3,3,3-tetrafluoropropene, and more preferred is at least one fluorinated monomer selected from the group consisting of CTFE, HFP, and fluoroalkyl vinyl ether.

In the PVdF, the content of the unit derived from the monomer copolymerizable with VdF is preferably 0.10 to 8.0 mol%, more preferably 0.50 mol% or more and less than 5.0 mol%, and even more preferably 0.50 to 3.0 mol%, relative to total monomer units. The content of the fluorinated monomer unit is preferably 0.10 to 8.0 mol% and more preferably 0.50 mol% or more and less than 5.0 mol%, relative to total monomer units. Further, the content of the unit derived from the monomer copolymerizable with VdF may be less than 1.0 mol% relative to total monomer units.

In the present specification, the compositional features of the PVdF can be measured by $^{19}F$-NMR spectroscopy.

The PVdF may have a polar group and, in this case, higher adhesion between an electrode mixture layer and a current collector can be achieved. The polar group is not limited and may be any functional group having polarity. In order to achieve higher adhesion between an electrode mixture layer and a current collector, it is preferable that the polar group be at least one selected from the group consisting of a carbonyl-containing group, an epoxy group, a hydroxy group, a sulfonic acid group, a sulfuric acid group, a phosphoric acid group, an amino group, an amide group, and an alkoxy group. More preferred is at least one selected from the group consisting of a carbonyl-containing group, an epoxy group, and a hydroxy group, and even more preferred is a carbonyl-containing group. The hydroxy group is other than a hydroxy group constituting part of the carbonyl-containing group. The amino group is a monovalent functional group resulting from removal of hydrogen from ammonia or from a primary or secondary amine.

The carbonyl-containing group is a functional group having a carbonyl group (-C(=O)-). In order to achieve higher adhesion between an electrode mixture layer and a current collector, it is preferable that the carbonyl-containing group be a group represented by the formula -COOR, wherein R is a hydrogen atom, an alkyl group, or a hydroxyalkyl group, or a carboxylic anhydride group. More preferred is a group represented by the formula -COOR. The number of carbon atoms in the alkyl group and hydroxyalkyl group is preferably 1 to 16, more preferably 1 to 6, and even more preferably 1 to 3. Specific examples of the group represented by the formula -COOR include $-COOCH_2CH_2OH$, $-COOCH_2CH(CH_3)OH$, $-COOCH(CH_3)CH_2OH$, -COOH, $-COOCH_3$, and $-COOC_2H_5$. When the group represented by the formula -COOR is or contains - COOH, the group -COOH may be derived from a carboxylic acid salt such as a metal carboxylate or an ammonium carboxylate.

Preferred as the amide group is a group represented by the formula -CO-NRR', wherein R and R' are each independently a hydrogen atom or a substituted or unsubstituted alkyl group, or a bond represented by the formula -CO-NR"-, wherein R" is a hydrogen atom, a substituted or unsubstituted alkyl group, or a substituted or unsubstituted phenyl group.

The polar group may be introduced into the PVdF by polymerizing VdF and a monomer having the polar group (this monomer will be referred to as "polar group-containing monomer" hereinafter) or may be introduced into the PVdF by reacting the PVdF and a compound having the polar group. In terms of productivity, it is preferable to polymerize VdF and the polar group-containing monomer.

Polymerization of VdF and the polar group-containing monomer yields PVdF having VdF unit and a polar group-containing monomer unit. That is, it is preferable that the PVdF contain the polar group-containing monomer unit, in order to achieve higher adhesion between an electrode mixture layer and a current collector. The content of the polar group-containing monomer unit is preferably 0.001 to 8.0 mol%, more preferably 0.01 to 5.0 mol%, even more preferably

0.10 to 3.0 mol%, particularly preferably 0.15 to 3.0 mol%, and most preferably 0.30 to 1.5 mol% relative to total monomer units. Further, the content of the polar group-containing monomer unit may be less than 1.0 mol% relative to total monomer units.

In the present disclosure, the content of the polar group-containing monomer unit in the PVdF can, for example, when the polar group is an acid group such as that derived from a carboxylic acid, be measured by acid-base titration of the acid group.

Examples of the polar group-containing monomer include hydroxyalkyl (meth)acrylates such as hydroxyethyl acrylate and 2-hydroxypropyl acrylate; unsaturated dibasic acids such as maleic acid, maleic anhydride, citraconic acid, and citraconic anhydride; alkylidene malonic acid esters such as dimethyl methylidenemalonate; vinyl carboxyalkyl ethers such as vinyl carboxymethyl ether and vinyl carboxyethyl ether; carboxyalkyl (meth)acrylates such as 2-carboxyethyl acrylate and 2-carboxyethyl methacrylate; (meth)acryloyloxyalkyl dicarboxylic acid esters such as acryloyloxyethyl succinate, methacryloyloxyethyl succinate, acryloyloxyethyl phthalate, and methacryloyloxyethyl phthalate; and unsaturated dibasic acid monoesters such as monomethyl maleate, monoethyl maleate, monomethyl citraconate, and monoethyl citraconate; and a monomer (2) represented by the following formula (2):

[Formula 2]

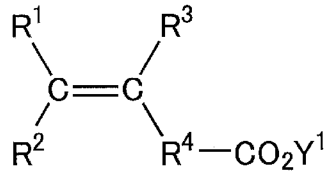

wherein: $R^1$ to $R^3$ are each independently a hydrogen atom, a chlorine atom, or a hydrocarbon group having 1 to 8 carbon atoms; $R^4$ is a single bond, a hydrocarbon group having 1 to 8 carbon atoms, a heteroatom, or an atomic group having a molecular weight of 500 or less, the atomic group containing at least one heteroatom selected from the group consisting of an oxygen atom, a sulfur atom, a nitrogen atom, and a phosphorus atom and containing a main chain having 1 to 20 atoms; and $Y^1$ is an inorganic cation and/or organic cation.

The monomer (2) is as described above for the monomer (2) for forming the fluorine-containing copolymer. Preferred as the polar group-containing monomer for forming the PVdF are hydroxyethyl acrylate, 2-hydroxypropyl acrylate, acrylic acid, methacrylic acid, 2-carboxyethyl acrylate, 2-carboxyethyl methacrylate, acryloyloxyethyl succinate, methacryloyloxyethyl succinate, acryloyloxypropyl succinate, and methacryloyloxypropyl succinate.

When the PVdF and a compound having the polar group are reacted to introduce the polar group into the PVdF, the above polar group-containing monomer or a silane or titanate coupling agent having a group reactive with the PVdF and a hydrolyzable group can be used as the compound having the polar group. The hydrolyzable group is preferably an alkoxy group. When a coupling agent is used, the coupling agent can be added to the PVdF by reacting the coupling agent with the PVdF dissolved in or swelled with a solvent.

The PVdF used can be one obtained by subjecting PVdF to partial hydrogen fluoride removal with the aid of a base and then reacting the PVdF subjected to partial hydrogen fluoride removal with an oxidant. Examples of the oxidant include hydrogen peroxide, hypochlorous acid salts, palladium halide, chromium halide, alkali metal permanganates, peroxyacid compounds, alkyl peroxides, and alkyl persulfate.

In order to achieve higher adhesion between an electrode mixture layer and a current collector, the content of the VdF unit in the PVdF is preferably 84.0 to 99.999 mol%, more preferably 90.0 mol% or more, even more preferably 92.0 mol% or more, particularly preferably 95.0 mol% or more, and most preferably 97.0 mol% or more, relative to total monomer units. As for the upper limit, the content is preferably 99.99 mol% or less, more preferably 99.90 mol% or less, even more preferably 99.899 mol% or less, still even more preferably 99.70 mol% or less, still even more preferably 99.50 mol% or less, still even more preferably 99.49 mol% or less, and most preferably 99.20 mol% or less.

The weight-average molecular weight (polystyrene equivalent) of the PVdF is preferably 160000 to 2760000, more preferably 200000 or more, even more preferably 300000 or more and is more preferably 2530000 or less and even more preferably 2000000 or less. The weight-average molecular weight can be measured by gel permeation chromatography (GPC) using dimethylformamide as a solvent.

The number-average molecular weight (polystyrene equivalent) of the PVdF is preferably 70000 to 1200000 and more preferably 140000 or more and is more preferably 1100000 or less. The number-average molecular weight can be measured by gel permeation chromatography (GPC) using dimethylformamide as a solvent.

The melting point of the PVdF is preferably 100 to 240°C, more preferably 130 to 200°C, and particularly preferably 140 to 180°C. The melting point can be measured using a differential scanning calorimetry (DSC) apparatus and determined as a temperature at which a heat-of-fusion curve obtained during heating at a rate of 10°C/min shows

a maximum.

The average particle size of the PVdF is preferably 1000 μm or less, more preferably 750 μm or less and even more preferably 350 μm or less, and preferably 0.1 μm or more and more preferably 0.2 μm or more, in order to enable easy dissolution or dispersion of the PVdF in a solvent.

The PVdF can be produced by a commonly known method, such as by mixing VdF, the above polar group-containing monomer, and an additive such as a polymerization initiator and a polymerization emulsifier as appropriate to carry out solution polymerization, suspension polymerization, or emulsion polymerization.

In order to enable further reduction in the viscosity increase of an electrode mixture and enable formation of an electrode mixture layer more superior in adhesion to current collector and flexibility and more resistant to the spring-back, the mass ratio between the fluorine-containing copolymer and the PVdF (fluorine-containing copolymer/PVdF) in the composition for an electrochemical device according to the present disclosure is preferably 99/1 to 1/99, more preferably 95/5 to 3/97, even more preferably 90/10 to 5/95, particularly preferably 70/30 to 7/93, and most preferably 50/50 to 10/90.

The composition for an electrochemical device according to the present disclosure may contain, in addition to the fluorine-containing copolymer and the PVdF, another polymer as a binder. Examples of the other polymer include polymethacrylate, polymethyl methacrylate, polyacrylonitrile, polyimide, polyamide, polyamide-imide, polycarbonate, styrene rubber, and butadiene rubber.

The content of the binder in the composition for an electrochemical device according to the present disclosure is preferably 0.01 to 10 mass%, more preferably 0.2 to 5.0 mass%, even more preferably 0.5 to 3.0 mass%, and particularly preferably 0.8 to 2.5 mass% relative to the mass of the composition in order to enable the composition for an electrochemical device to maintain its viscosity at an appropriate level and in order to achieve high binding performance when forming an electrode mixture layer. When the content of the binder is within the above range, the composition for an electrochemical device has an appropriate level of viscosity, and an electrode mixture in which the components are well-dispersed can be prepared without applying an extremely strong shear force. Thus, a three-dimensional network of the single-walled carbon nanotubes is well-formed in the resulting electrode mixture layer and, in addition, both higher adhesion between the electrode mixture layer and a current collector and higher flexibility of an electrode structure can be achieved.

The optical concentration (optical density) of the composition for an electrochemical device according to the present disclosure is preferably 0.3 to 0.7 absorbance unit, more preferably 0.40 to 0.65 absorbance unit, and even more preferably 0.42 to 0.62 absorbance unit. The optical concentration can be determined by measuring the light absorption at a wavelength of 500 nm for a solution containing 0.001 mass% of the single-walled carbon nanotube using a spectrophotometer cell having an optical path length of 10 mm and using an NMP solution as a reference.

When the light absorption at a wavelength of 500 nm of a solution obtained by diluting or concentrating the composition for an electrochemical device according to the present disclosure as necessary and thus adjusting the concentration of the single-walled carbon nanotube to 0.001 mass% is within the above range, the dispersibility in an electrode mixture is high, and the electrode mixture can be prepared without applying an extremely strong shear force. Thus, a three-dimensional network of the single-walled carbon nanotubes is well-formed in the resulting electrode mixture layer and, in addition, both the adhesion between the electrode mixture layer and a current collector and the flexibility of an electrode structure can be ensured.

## Solvent

The composition for an electrochemical device according to the present disclosure further comprises a solvent. Preferred as the solvent is an organic solvent, examples of which include the following widely-used low-boiling organic solvents: nitrogen-containing organic solvents such as N-methyl-2-pyrrolidone, N,N-dimethylacetamide, and dimethylformamide; ketone solvents such as acetone, methyl ethyl ketone, cyclohexanone, and methyl isobutyl ketone; ester solvents such as ethyl acetate and butyl acetate; ether solvents such as tetrahydrofuran and dioxane; β-alkoxypropionamides such as β-methoxy-N,N-dimethylpropionamide, β-n-butoxy-N,N-dimethylpropionamide, and β-n-hexyloxy-N,N-dimethylpropionamide; and mixtures of these solvents. Preferred as the solvent is at least one selected from the group consisting of N,N-dimethylformamide, N,N-dimethylacetamide, N-methyl-2-pyrrolidone, N-ethyl-2-pyrrolidone, and β-alkoxypropionamides in terms of high ease of application, and more preferred is at least one selected from the group consisting of N-methyl-2-pyrrolidone and N,N-dimethylacetamide.

The viscosity of the composition for an electrochemical device according to the present disclosure is preferably 5 to 8000 mPa·s, more preferably 100 to 5000 mPa·s, and even more preferably 100 to 2000 mPa·s. The viscosity is measured using a B-type viscometer (LV-DV2T, manufactured by Brookfield) with rotor No. SC4-21 at a temperature of 25°C and a rotation speed of 20 rpm. When the viscosity of the composition for an electrochemical device according to the present disclosure is within the above range, an electrode mixture in which the components are well-dispersed can be prepared without applying an extremely strong shear force. Thus, a three-dimensional network of the single-walled carbon nanotubes is well-formed in the resulting electrode mixture layer and, in addition, both higher adhesion between the electrode mixture layer and a current collector and higher flexibility of an electrode structure can be achieved.

The composition for an electrochemical device according to the present disclosure is a composition for use in formation of a constituent member of an electrochemical device. The electrochemical device is not limited and may be any device that preforms conversion between electrical energy and chemical energy, and examples of the device include a lithium-ion secondary battery, a lithium-ion capacitor, a hybrid capacitor, an electrical double layer capacitor, and an aluminum electrolytic capacitor. Preferred as the electrochemical device is a lithium-ion secondary battery or a lithium-ion capacitor. Examples of the constituent member of the electrochemical device include an electrode and a separator. In particular, it is preferable that the composition for an electrochemical device according to the present disclosure be used in formation of an electrode of a lithium-ion secondary battery or lithium-ion capacitor. For Example, the composition for an electrochemical device according to the present disclosure may be used in formation of a positive electrode mixture layer, a negative electrode mixture layer, an electroconductive layer or an adhesive layer (undercoat) formed between a positive electrode mixture layer and a current collector, and an electroconductive layer or an adhesive layer (undercoat) formed between a negative electrode mixture layer and a current collector. Further, since the use of the composition for an electrochemical device according to the present disclosure allows obtaining a positive electrode mixture resistant to viscosity increase even a long time after preparation and further allows forming a low-resistance positive electrode mixture layer and forming a positive electrode mixture layer superior both in adhesion to current collector and in flexibility and resistant to spring-back, it is more preferable that the composition be used in formation of a positive electrode of a lithium-ion secondary battery, and it is even more preferable that the composition be used in formation of a positive electrode mixture layer of a positive electrode of a lithium-ion secondary battery. It is preferable that the composition for an electrochemical device according to the present disclosure contain no positive electrode active material, and the composition can be distinguished from a positive electrode mixture described later in that the composition contains no positive electrode active material.

The composition for an electrochemical device according to the present disclosure can be prepared by mixing the components. The order in which the components are mixed is not limited. For example, the composition for an electrochemical device can be prepared by a method in which the single-walled carbon nanotube and the solvent are mixed and then the resulting dispersion and the binder are mixed.

A known stirring device can be used for the mixing. With the use of a homogenizer, the composition for an electrochemical device that contains the single-walled carbon nanotube and the binder uniformly dispersed in the solvent can easily be obtained.

As the homogenizer there can be used, for example, a rotary homogenizer, an ultrasonic homogenizer, or a high-pressure homogenizer. The output power of the ultrasonic homogenizer may be 5 to 50 kW. The amount of energy applied by the ultrasonic homogenizer to the dispersion or the composition for an electrochemical device may be 0.1 to 1 kWh per kg of the dispersion or the composition for an electrochemical device. The pressure applied by the high-pressure homogenizer during mixing may be 100 to 2000 bar. The dispersion or the composition for an electrochemical device may be passed through the high-pressure homogenizer a plurality of times and may be passed through the high-pressure homogenizer 2 to 20 times.

The composition for an electrochemical device according to the present disclosure can be prepared, for example, by a method in which the single-walled carbon nanotube and the solvent are mixed using an ultrasonic homogenizer and then the resulting dispersion and the binder are mixed using a high-pressure homogenizer. The single-walled carbon nanotube and the solvent may be mixed using an ultrasonic homogenizer under stirring with a stirrer.

## Positive Electrode Mixture

A positive electrode mixture according to the present disclosure comprises the above composition for an electrochemical device and a positive electrode active material. Thus, the positive electrode mixture according to the present disclosure comprises the single-walled carbon nanotube, binder, and solvent contained in the composition for an electrochemical device and a positive electrode active material. The positive electrode mixture according to the present disclosure is resistant to viscosity increase even a long time after preparation and can be formed into a low-resistance positive electrode mixture layer and also into a positive electrode mixture layer superior both in adhesion to current collector and in flexibility and resistant to the spring-back.

The content of the single-walled carbon nanotube in the positive electrode mixture according to the present disclosure may be 0.001 to 10 parts by mass and is preferably 0.001 to 2 parts by mass, more preferably 0.005 parts by mass or more, even more preferably 0.01 parts by mass or more, and particularly preferably 0.05 parts by mass or more, and is more preferably 1.0 part by mass or less, even more preferably 0.2 parts by mass or less, and particularly preferably 0.1 parts by mass or less, relative to 100 parts by mass of the positive electrode active material.

The content of the binder in the positive electrode mixture according to the present disclosure is preferably 0.1 to 5.0 parts by mass, more preferably 0.3 parts by mass or more, and even more preferably 0.5 parts by mass or more

and is more preferably 3.0 parts by mass or less and even more preferably 2.0 parts by mass or less, relative to 100 parts by mass of the positive electrode active material. The binder in the positive electrode mixture according to the present disclosure may be any binder containing the fluorine-containing copolymer and may consist of the fluorine-containing copolymer or contain not only a fluorine-containing copolymer but also PVdF. When the binder contains the fluorine-containing copolymer and PVdF, the mass ratio between the fluorine-containing copolymer and the PVdF (fluorine-containing copolymer/PVdF) is preferably 99/1 to 1/99, more preferably 95/5 to 3/97, even more preferably 90/10 to 5/95, particularly preferably 70/30 to 7/93, and most preferably 50/50 to 10/90, in order to enable further reduction in the viscosity increase of the positive electrode mixture and enable formation of a positive electrode mixture layer more superior in adhesion to current collector and flexibility and more resistant to the spring-back.

Positive Electrode Active Material

The positive electrode active material is not limited and may be any positive electrode active material capable of intercalating and deintercalating lithium ions electrochemically. Preferred as the positive electrode active material is a material containing lithium and at least one transition metal, and examples of the material include a lithium-transition metal composite oxide and a lithium-containing transition metal phosphate compound.

Preferred as the transition metal of the lithium-transition metal composite oxide are V, Ti, Cr, Mn, Fe, Co, Ni, Cu, etc., and specific examples of the lithium-transition metal composite oxide include: lithium-cobalt composite oxides such as $LiCoO_2$; lithium-nickel composite oxides such as $LiNiO_2$; lithium-manganese composite oxides such as $LiMnO_2$, $LiMn_2O_4$, and $Li_2MnO_3$; and composite oxides resulting from substitution of part of the main transition metal atoms of these lithium-transition metal composite oxides by other metals such as Al, Ti, V, Cr, Mn, Fe, Co, Li, Ni, Cu, Zn, Mg, Ga, Zr, and Si. Examples of the substituted composite oxides include lithium-nickel-manganese composite oxides, lithium-nickel-cobalt-aluminum composite oxides, lithium-nickel-cobalt-manganese composite oxides, lithium-manganese-aluminum composite oxides, and lithium-titanium composite oxides. Specific examples of the substituted composite oxides include $LiNi_{0.5}Mn_{0.5}O_2$, $LiNi_{0.85}Co_{0.10}Al_{0.05}O_2$, $LiNi_{0.82}CO_{0.15}Al_{0.03}O_2$, $LiNi_{0.80}Co_{0.15}Al_{0.05}O_2$, $LiNi_{1/3}Co_{1/3}Mn_{1/3}O_2$, $LiMn_{1.8}Al_{0.2}O_4$, $LiMn_{1.5}Ni_{0.5}O_4$, and $Li_4Ti_5O_{12}$.

Preferred as the transition metal of the lithium-containing transition metal phosphate compound are V, Ti, Cr, Mn, Fe, Co, Ni, Cu, etc. Specific examples of the lithium-containing transition metal phosphate compound include: iron phosphates such as $LiFePO_4$, $Li_3Fe_2(PO_4)_3$, and $LiFeP_2O_7$; cobalt phosphates such as $LiCoPO_4$; and transition metal phosphate compounds resulting from substitution of part of the main transition metal atoms of these lithium-containing transition metal phosphate compounds by other metals such as Al, Ti, V, Cr, Mn, Fe, Co, Li, Ni, Cu, Zn, Mg, Ga, Zr, Nb, and Si.

Preferred positive electrode active materials are at least one selected from the group consisting of lithium-cobalt composite oxides, lithium-nickel composite oxides, lithium-manganese composite oxides, iron phosphates, lithium-nickel-manganese composite oxides, lithium-nickel-cobalt-manganese composite oxides and lithium-nickel-cobalt-aluminum composite oxides, in order to enable formation of a battery superior in output characteristic, cycle characteristic, and 60°C storage characteristic. More preferred is at least one selected from the group consisting of $LiCoO_2$, $LiNiO_2$, $LiMn_2O_4$, $LiFePO_4$, $LiNi_{0.33}Mn_{0.33}Co_{0.33}O_2$, $LiNi_{0.5}Mn_{0.3}Co_{0.2}O_2$, $LiNi_{0.82}Co_{0.15}Al_{0.03}O_2$, $LiNi_{0.6}Mn_{0.2}Co_{0.2}O_2$, $LiNi_{0.8}Mn_{0.1}Co_{0.1}O_2$, and $LiNi_{0.90}Mn_{0.05}Co_{0.05}O_2$.

The positive electrode active materials composite oxides may be lithium-nickel composite oxides, and may be lithium-nickel composite oxides represented by the formula (1) : $Li_yNi_{1-x}M_xO_2$, wherein x satisfies $0.01 \le x \le 0.5$, y satisfies $0.9 \le y \le 1.2$, and M is a metal atom other than Ni. A positive electrode active material containing Ni in such a large proportion is beneficial for increasing the capacity of a secondary battery. Even when containing a positive electrode active material containing Ni in a large proportion, the positive electrode mixture according to the present disclosure is resistant to viscosity increase and can be formed into a low-resistance positive electrode mixture layer and also into a positive electrode mixture layer superior both in adhesion to current collector and in flexibility and resistant to the spring-back.

In the formula (1), x is a number satisfying $0.01 \le x \le 0.5$. In order to enable obtaining a higher-capacity secondary battery, x preferably satisfies $0.05 \le x \le 0.4$ and more preferably satisfies $0.10 \le x \le 0.3$.

Examples of the metal atom M in the formula (1) include V, Ti, Cr, Mn, Fe, Co, Cu, Al, Zn, Mg, Ga, Zr, and Si. Preferred as the metal atom M are transition metals such as V, Ti, Cr, Mn, Fe, Co, and Cu or combinations of any of these transition metals with any other metal such as Al, Ti, V, Cr, Mn, Fe, Co, Cu, Zn, Mg, Ga, Zr, or Si.

Preferred as lithium-nickel composite oxides represented by the formula (1) is at least one selected from the group consisting of $LiNi_{0.82}Co_{0.15}Al_{0.03}O_2$, $LiNi_{0.6}Mn_{0.2}Co_{0.2}O_2$, $LiNi_{0.8}Mn_{0.1}Co_{0.1}O_2$, and $LiNi_{0.90}Mn_{0.05}Co_{0.05}O_2$, and more preferred is at least one selected from the group consisting of $LiNi_{0.82}Co_{0.15}Al_{0.03}O_2$ and $LiNi_{0.8}Mn_{0.1}Co_{0.1}O_2$.

A lithium-nickel composite oxide represented by the formula (1) may be used in combination with a different positive electrode active material. Specific examples of the different positive electrode active material include $LiCoO_2$, $LiMnO_2$, $LiMn_2O_4$, $Li_2MnO_3$, $LiMn_{1.8}Al_{0.2}O_4$, $Li_4Ti_5O_{12}$, $LiFePO_4$, $Li_3Fe_2(PO_4)_3$, $LiFeP_2O_7$, $LiCoPO_4$, $Li_{1.2}Fe_{0.4}Mn_{0.4}O_2$,

$LiNiO_2$, and $LiNi_{0.5}Mn_{0.3}Co_{0.2}O_2$.

The positive electrode active material used can be one composed of a positive electrode active material as a substrate and another material differing in composition from the positive electrode active material and deposited on the surface of the positive electrode active material. Examples of the surface-deposited material include: oxides such as aluminum oxide, silicon oxide, titanium oxide, zirconium oxide, magnesium oxide, calcium oxide, boron oxide, antimony oxide, and bismuth oxide; sulfuric acid salts such as lithium sulfate, sodium sulfate, potassium sulfate, magnesium sulfate, calcium sulfate, and aluminum sulfate; and carbonic acid salts such as lithium carbonate, calcium carbonate, and magnesium carbonate.

Such a surface-deposited material can be deposited on the surface of a positive electrode active material by methods such as: by dissolving or suspending the to-be-deposited material in a solvent, impregnating the positive electrode active material with the resulting solution or suspension, and drying the impregnated positive electrode active material; by dissolving or suspending a surface-deposited material precursor in a solvent, impregnating the positive electrode active material with the resulting solution or suspension, and then inducing a reaction by a technique such as heating; and by adding the to-be-deposited material to a positive electrode active material precursor and baking the to-be-deposited material and the positive electrode active material precursor together.

The amount by mass of the surface-deposited material used relative to the positive electrode active material is preferably 0.1 ppm or more, more preferably 1 ppm or more, and even more preferably 10 ppm or more and is preferably 20% or less, more preferably 10% or less, and even more preferably 5% or less. The presence of the surface-deposited material can prevent the oxidation reaction of a non-aqueous electrolyte solution on the surface of the positive electrode active material and increase the service life of a battery. If the amount of the deposited material is extremely small, sufficient effect of the material cannot be obtained, while if the amount of the deposited material is extremely large, the material may obstruct entry and exit of lithium ions to cause an increase in resistance.

The shape of the particles used as the positive electrode active material may be that of conventionally used particles, such as a lump shape, a polygonal shape, a spherical shape, an ellipsoidal shape, a platelet shape, a needle shape, or a pillar shape. Especially preferred particles are those composed of secondary particles formed by aggregation of primary particles, the secondary particles being spherical or ellipsoidal. An electrochemical element generally undergoes swelling and shrinkage of an active material in an electrode upon charge and discharge, and thus defects such as breakage of the active material and disconnection of a conduction path are likely to occur due to the stress induced by the swelling and shrinkage. Therefore, an active material composed of secondary particles formed by aggregation of primary particles is more preferred than a single-particle active material consisting of primary particles, in order to reduce the swelling/shrinkage-induced stress and prevent defects. Additionally, spherical or ellipsoidal particles are preferred because formation of these particles into an electrode results in a lower degree of orientation of the electrode and hence less swelling and shrinkage of the electrode upon charge and discharge than formation of axially oriented particles such as platelet-shaped particles into an electrode and because spherical or ellipsoidal particles are more uniformly mixed with a conductive additive in fabrication of an electrode.

The tapped density of the positive electrode active material is typically 1.3 $g/cm^3$ or more, preferably 1.5 $g/cm^3$ or more, even more preferably 1.6 $g/cm^3$ or more, and most preferably 1.7 $g/cm^3$ or more. If the tapped density of the positive electrode active material is below the lower limit, the amount of a dispersion medium required for formation of a positive electrode mixture layer increases, and the required amounts of a conductive additive and a binder also increase, which may lead to a limited degree of filling of the positive electrode mixture layer with the positive electrode active material and hence to limited battery capacity. The use of a positive electrode active material having a high tapped density allows formation of a high-density positive electrode mixture layer. A higher tapped density is generally preferred, and the upper limit of the tapped density is not particularly specified. However, if the tapped density is extremely high, diffusion of lithium ions in a positive electrode mixture layer by mediation of a non-aqueous electrolyte solution may be rate-limited, and the load characteristic may be likely to deteriorate. Thus, the tapped density is typically 2.5 $g/cm^3$ or less and preferably 2.4 $g/cm^3$ or less.

The tapped density of the positive electrode active material is defined as follows: the sample is passed through a sieve with an opening size of 300 $\mu m$ and dropped into a 20-$cm^3$ tapping cell to fill the volume of the cell, then a powder density meter (e.g., Tap Denser manufactured by Seishin Enterprise Co., Ltd.) is used to perform tapping 1000 times with a stroke length of 10 mm and determine the density of the sample from the volume and the weight of the sample, and the thus determined density is defined as the tapped density.

The median diameter d50 of the particles of the positive electrode active material (the secondary particle size when the particles are secondary particles formed by aggregation of primary particles) is typically 0.1 $\mu m$ or more, preferably 0.5 $\mu m$ or more, more preferably 1 $\mu m$ or more, and most preferably 3 $\mu m$ or more and is typically 20 $\mu m$ or less, preferably 18 $\mu m$ or less, more preferably 16 $\mu m$ or less, and most preferably 15 $\mu m$ or less. If the median diameter d50 is below the lower limit, a high-bulk density product may not be obtained. If the median diameter d50 is above the upper limit, the following problems may arise: diffusion of lithium in the particles takes a lot of time, and consequently the battery performance deteriorates; and when a positive electrode of a battery is fabricated, namely when the positive

electrode active material, a conductive additive, and a binder are mixed in a solvent and the resulting slurry is applied into a thin film, the slurry is stringy. Two or more different positive electrode active materials having different median diameters d50 may be mixed to further increase the degree of filling of a positive electrode to be fabricated.

The median diameter d50 in the present disclosure can be measured by a known laser diffraction/scattering particle size distribution measurement apparatus. When the particle size distribution analyzer used is LA-920 manufactured by HORIBA, LTD., LTD., a 0.1 mass% aqueous solution of sodium hexametaphosphate is used as a dispersion medium for the measurement, the particles are dispersed in this solution by ultrasonication for 5 minutes and, after that, the measurement is carried out with the measurement refractive index set to 1.24.

When the particles of the positive electrode active material are secondary particles formed by aggregation of primary particles, the average primary particle size is typically 0.01 μm or more, preferably 0.05 μm or more, even more preferably 0.08 μm or more, and most preferably 0.1 μm or more and is typically 3 μm or less, preferably 2 μm or less, even more preferably 1 μm or less, and most preferably 0.6 μm or less. If the average primary particle size is above the upper limit, spherical secondary particles are difficult to form, and the degree of powder filling may be adversely affected, or the specific surface area may be significantly decreased, so that the likelihood of deterioration in battery performance such as deterioration in output characteristic may be high. If the average primary particle size is below the lower limit, the growth of crystals is generally insufficient, so that problems may arise such as poor reversibility of charge and discharge. The primary particle size is measured by observation with a scanning electron microscope (SEM). Specifically, in a photograph taken at a magnification of 10000 times, 50 primary particles are randomly selected, the length of the longest of horizontal straight line segments between the lateral boundaries of each primary particle is determined, and the average of the thus determined lengths is determined as the average primary particle size.

The BET specific surface area of the positive electrode active material is typically 0.2 $m^2/g$ or more, preferably 0.3 $m^2/g$ or more, and more preferably 0.4 $m^2/g$ or more and is typically 4.0 $m^2/g$ or less, preferably 2.5 $m^2/g$ or less, and more preferably 1.5 $m^2/g$ or less. If the BET specific surface area lies below the above range, the battery performance is likely to deteriorate, while if the BET specific surface area lies above the above range, the tapped density is difficult to increase, and a problem may be likely to arise with the ease of application of the positive electrode mixture.

The BET specific surface area is defined as follows using a surface area meter (e.g., a fully automatic surface area measurement apparatus manufactured by Okura Riken Co., Ltd.): the sample is preliminarily dried under a nitrogen stream at 150°C for 30 minutes, then the dried sample was subjected to measurement by gas flow-based nitrogen adsorption BET one-point method using a nitrogen-helium mixed gas strictly conditioned to give a nitrogen pressure of 0.3 relative to the atmospheric pressure, and the thus measured value is defined as the BET specific surface area.

The method used to produce the positive electrode active material is a common method of producing an inorganic compound. In particular, various methods are possible for fabrication of a spherical or ellipsoidal active material, and examples of the methods include: a method in which a transition metal raw material such as a nitric acid salt or sulfuric acid salt of a transition metal and optionally another raw material based on a different element are dissolved or pulverized and dispersed in a solvent such as water, the solution or dispersion is pH-adjusted under stirring to form and collect a spherical precursor, the collected precursor is dried as necessary, then a Li source such as LiOH, $Li_2CO_3$, or $LiNO_3$ is added to the precursor, and the precursor is baked at high temperature to give an active material; a method in which a transition metal raw material such as a nitric acid salt, sulfuric acid salt, hydroxide, or oxide of a transition metal, and optionally another raw material based on a different element are dissolved or pulverized and dispersed in a solvent such as water, the solution or dispersion is dry-formed into a spherical or ellipsoidal precursor by means such as a spray dryer, a Li source such as LiOH, $Li_2CO_3$, or $LiNO_3$ is added to the precursor, and the precursor is baked at high temperature to give an active material; and a method in which a transition metal raw material such as a nitric acid salt, sulfuric acid salt, hydroxide, or oxide of a transition metal, a Li source such as LiOH, $Li_2CO_3$, or $LiNO_3$, and optionally another raw material based on a different element are dissolved or pulverized and dispersed in a solvent such as water, the solution or dispersion is dry-formed into a spherical or ellipsoidal precursor by means such as a spray dryer, and the precursor is baked at high temperature to give an active material.

One positive electrode active material may be used alone, or two or more positive electrode active materials having different compositions or different powder properties may be used in any combination and proportions.

## Conductive Additive

It is preferable that the positive electrode mixture according to the present disclosure should not contain any conductive additive other than the single-walled carbon nanotube in order to enable formation of a positive electrode with the use of which an electrochemical device exhibiting a higher energy density can be provided.

In order to enable formation of a positive electrode with the use of which an electrochemical device having superior output characteristic and cycle characteristic can be provided, it is preferable that the positive electrode mixture according to the present disclosure further contain a conductive additive other than the single-walled carbon nanotube. Examples of the conductive additive include: carbon blacks such as acetylene black and KETJENBLACK; carbon materials such as graphite and graphene; other carbon materials such as carbon fibers, multi-walled carbon nanotubes, and carbon nanohorns.

The content of the conductive additive (except the single-walled carbon nanotube) in the positive electrode mixture according to the present disclosure is preferably 0.01 to 5 parts by mass, more preferably 0.05 to 3 parts by mass, and even more preferably 0.1 to 1.0 parts by mass relative to 100 parts by mass of the positive electrode active material.

Additive

The positive electrode mixture may further contain an additive such as an organic acid or a carboxylic acid in order to reduce the viscosity increase of the positive electrode mixture. Especially, it is preferable that the positive electrode mixture contain an organic acid.

Examples of the organic acid include acrylic acid, formic acid, citric acid, acetic acid, oxalic acid, lactic acid, pyruvic acid, malonic acid, propionic acid, maleic acid, citraconic acid, and butyric acid.

The content of the additive in the positive electrode mixture is preferably 0.001 to 5 mass%, more preferably 0.005 mass% or more, and even more preferably 0.01 mass% or more, and is more preferably 3 mass% or less and even more preferably 2 mass% or less, relative to the total mass of the binder and the positive electrode active material. When the content of the additive is within the above range, the viscosity increase of the positive electrode mixture can be further reduced.

The positive electrode mixture may contain anionic surfactants, cationic surfactants, nonionic surfactants, methyl cellulose, carboxymethyl cellulose, hydroxypropyl methyl cellulose, polyacrylic acid, polymethyl methacrylate, polyvinyl pyrrolidone, polyvinyl alcohol, polyacrylonitrile, in order to enhance the stability of the viscosity of the positive electrode mixture.

The viscosity of the positive electrode mixture is preferably 1000 to 80000 mPa·s, more preferably 2000 to 70000 mPa·s, and even more preferably 3000 to 60000 mPa·s, in order to easily apply the electrode mixture and easily obtain a positive electrode mixture layer having a desired thickness. The viscosity is measured using a B-type viscometer (LV-DV2T, manufactured by Brookfield) with rotor No. LV-4 at a temperature of 25°C and a rotation speed of 6 rpm.

The contents of the single-walled carbon nanotube, the binder, the positive electrode active material, the solvent, and the optionally contained conductive additive in the positive electrode mixture are chosen in view of the ease of application to a current collector and the quality of thin-film formation after drying. The total content of the single-walled carbon nanotube, the binder, the positive electrode active material, and the optionally contained conductive additive in the positive electrode mixture is preferably 50 to 90 mass% and more preferably 60 to 80 mass%.

The positive electrode mixture according to the present disclosure can be prepared by mixing the components. The order in which the components are mixed is not limited. For example, when the composition for an electrochemical device according to the present disclosure contains no PVdF, the composition for an electrochemical device according to the present disclosure and PVdF may be mixed first, and after that the other components such as the positive electrode active material may be added, or the composition for an electrochemical device according to the present disclosure and the positive electrode active material may be mixed first, and after that the other components such as PVdF may be added.

Positive Electrode Structure

A positive electrode structure according to the present disclosure comprises a current collector and a positive electrode mixture layer. The positive electrode mixture layer is formed using the positive electrode mixture described above. The positive electrode mixture layer may be provided on one or both sides of the positive electrode current collector.

The density of the positive electrode mixture layer is preferably 3.0 to 5.0 g/cm$^3$, more preferably 3.2 to 5.0 g/cm$^3$, and even more preferably 3.5 to 5.0 g/cm$^3$. Conventional high-density positive electrode mixture layers may suffer the phenomenon of increase in thickness (spring-back) when heat-treated. Since in the positive electrode structure according to the present disclosure, the positive electrode mixture layer is formed using the positive electrode mixture described above, the positive electrode mixture layer is resistant to the spring-back and superior in flexibility even when having high density.

The density of the positive electrode mixture layer can be calculated from the mass and volume of the positive electrode mixture layer.

The thickness of the positive electrode mixture layer is preferably 20 μm or more, more preferably 45 μm or more, even more preferably 70 μm or more, particularly preferably 75 μm or more, and most preferably 80 μm or more, and is preferably 170 μm or less and more preferably 150 μm or less. The positive electrode mixture layer formed using the positive electrode mixture according to the present disclosure is superior in flexibility even when having a relatively large thickness.

The thickness of the positive electrode mixture layer can be measured with a micrometer gauge. In the present

disclosure, when the positive electrode mixture layer is provided on both sides of a positive electrode current collector, the thickness of the positive electrode mixture layer refers to the thickness of the layer on each side of the positive electrode current collector.

The content of the positive electrode active material in the positive electrode mixture layer is preferably 96.0 to 99 mass%, more preferably 96.5 to 98.9 mass%, and even more preferably 97.0 to 98.8 mass% relative to the mass of the positive electrode mixture layer, in order to enable further reduction in the viscosity increase of the positive electrode mixture and enable formation of a positive electrode mixture layer having lower resistance, more superior in adhesion to current collector and flexibility, and more resistant to the spring-back.

Current Collector

The positive electrode structure according to the present disclosure comprises a current collector. Examples of the current collector comprised in the positive electrode structure according to the present disclosure include foils or meshes of metals such as iron, stainless steel, copper, aluminum, nickel, and titanium, among which an aluminum foil is preferred.

Method of Producing Positive Electrode Structure

The positive electrode structure according to the present disclosure can be suitably produced by a production method comprising the steps of: preparing a positive electrode mixture containing at least a single-walled carbon nanotube, a binder, a solvent, and a positive electrode active material; and applying the obtained positive electrode mixture to a current collector. The application of the positive electrode mixture may be followed by drying of the coating of the applied positive electrode mixture and by pressing of the dried coating.

The amount of the positive electrode mixture applied to the current collector is preferably 20 $mg/cm^2$ or more, more preferably 22 $mg/cm^2$ or more, even more preferably 25 $mg/cm^2$ or more, particularly preferably 28 $mg/cm^2$ or more in order to enable achievement of an increased capacity of a lithium-ion secondary battery, and is preferably 60 $mg/cm^2$ or less and more preferably 50 $mg/cm^2$ or less in order to prevent cracking of the positive electrode mixture layer. The amount of the positive electrode mixture applied corresponds to the dry weight of the positive electrode mixture per unit area. Even when a relatively thick positive electrode mixture layer is formed by application of a relatively large amount of the positive electrode mixture according to the present disclosure to the current collector, the obtained positive electrode mixture layer is superior in flexibility. Even when a high-density positive electrode mixture layer is formed by application of a relatively large amount of the positive electrode mixture according to the present disclosure to the current collector and by the subsequent pressing at a high pressure, the obtained positive electrode mixture layer is resistant to the spring-back.

Secondary Battery

The present disclosure also provides a secondary battery comprising the positive electrode structure described above. It is preferable that the secondary battery according to the present disclosure further comprise a negative electrode structure and a non-aqueous electrolyte solution in addition to the positive electrode structure described above. By comprising the positive electrode structure described above, the secondary battery of the present disclosure is superior in output characteristic, cycle characteristic, and 60°C storage characteristic.

The non-aqueous electrolyte solution is not limited, and one or more known solvents such as propylene carbonate, ethylene carbonate, butylene carbonate, $\gamma$-butyllactone, 1,2-dimethoxyethane, 1,2-diethoxyethane, dimethyl carbonate, diethyl carbonate, and ethyl methyl carbonate can be used. The electrolyte used can also be any of conventionally known electrolytes, and electrolytes such as $LiClO_4$, $LiAsF_6$, $LiPF_6$, $LiBF_4$, LiCl, LiBr, $CH_3SO_3Li$, $CF_3SO_3Li$, and cesium carbonate can be used.

The positive electrode structure according to the present disclosure is superior in flexibility and has sufficient adhesion between the positive electrode mixture layer and the current collector, thus being suitable for use as a positive electrode structure for a wound secondary battery. The secondary battery according to the present disclosure may be a wound secondary battery.

The positive electrode structure according to the present disclosure is useful for use in non-aqueous electrolyte solution secondary batteries, in particular not only in lithium-ion secondary batteries as described above in which liquid electrolytes are used but also in polymer electrolyte lithium secondary batteries. The positive electrode structure is also useful for use in electrical double layer capacitors.

While various embodiments have been described herein above, it is to be appreciated that various changes in form and detail may be made without departing from the spirit and scope presently or hereafter claimed.

EXAMPLES

Hereinafter, embodiments of the present disclosure will be described by examples. The present disclosure is not limited only to the examples.

Various parameters concerning the examples were measured by the methods described below.

<Compositional features of Fluorine-Containing Copolymer>

(Ratio between VdF Unit and TFE Unit)

The ratio between VdF unit and TFE unit was measured by $^{19}$F-NMR spectroscopy on a DMF-$d_7$ solution of the fluorine-containing copolymer using an NMR analyzer (VNS400MHz, manufactured by Agilent Technologies Inc.).

In the $^{19}$F-NMR spectroscopy, the following peak areas (A, B, C, and D) were determined, and the ratio between VdF unit and TFE unit was calculated.

A: Area of peak from -86 ppm to -98 ppm
B: Area of peak from -105 ppm to -118 ppm
C: Area of peak from -119 ppm to -122 ppm
D: Area of peak from -122 ppm to -126 ppm

Proportion of VdF unit:$(4A + 2B)/(4A + 3B + 2C + 2D) \times 100$ [mol%]
Proportion of TFE unit: $(B + 2C + 2D)/(4A + 3B + 2C + 2D) \times 100$ [mol%]

(Ratio between VdF Unit and HFP Unit and Ratio between VdF unit and PMVE Unit)

The ratio between VdF unit and HFP unit and the ratio between VdF unit and PMVE unit were measured by $^{19}$F-NMR spectroscopy on a DMF-$d_7$ solution of the fluorine-containing copolymer using an NMR analyzer (VNS400MHz, manufactured by Agilent Technologies Inc.).

(Content of Polar Group-Containing Monomer Unit)

The content of the polar group-containing monomer unit (including 4-pentenoic acid unit, 3-butenoic acid unit, and acrylic acid unit) in the fluorine-containing copolymer was measured by acid-base titration of the carboxy group. About 0.5 g of the fluorine-containing copolymer was dissolved in acetone at a temperature of 70 to 80°C. 5 ml of water was added to prevent solidification of the fluorine-containing copolymer. The titration was carried out with an aqueous NaOH solution having a concentration of 0.1 N until a neutral acidity was completely reached through neutral transition at about -270 mV. Based on the measured acid equivalent, the molar amount of the polar group-containing monomer unit contained in 1 g of the fluorine-containing copolymer was determined to calculate the content of the polar group-containing monomer unit.

<Compositional features of PVdF>

(Content of Polar Group-Containing Monomer Unit)

The content of the polar group-containing monomer unit (including acrylic acid unit, maleic acid unit, and 3-butenoic acid unit) in the PVdF was measured by acid-base titration of the carboxylic acid group. About 0.5 g of the PVdF was dissolved in acetone at a temperature of 70 to 80°C. 5 ml of water was added to prevent solidification of the PVdF. The titration was carried out with an aqueous NaOH solution having a concentration of 0.1 N until a neutral acidity was completely reached through neutral transition at about -270 mV. Based on the measurement result, namely the measured acid equivalent, the molar amount of the polar group-containing monomer unit contained in 1 g of the PVdF was determined to calculate the content of the polar group-containing monomer unit.

<Weight-Average Molecular Weight>

The measurement was conducted by gel permeation chromatography (GPC). The weight-average molecular weight was calculated from data measured by using AS-8010, CO-8020, and columns (three serially connected GMHHR-H) manufactured by Tosoh Corporation and RID-10A manufactured by Shimadzu Corporation and by feeding dimethylformamide (DMF) as a solvent at a flow rate of 1.0 ml/min (reference: polystyrene).

<Melting Point>

Using a differential scanning calorimetry (DSC) apparatus, a temperature at which a heat-of-fusion curve obtained during raising the temperature from 30°C to 220°C at a rate of 10°C/min, then lowering to 30°C at a rate of 10°C/min, and again raising to 220°C at a rate of 10°C/min showed a maximum was determined as the melting point.

<Storage Elastic Modulus (E')>

The storage elastic modulus (E') is a value determined by a dynamic viscoelasticity analysis at 30°C or 60°C, and was measured by using a dynamic viscoelasticity analyzer DVA 220 manufactured by IT keisoku seigyo sya with a sample with a length of 30 mm, a width of 5 mm, and a thickness of 50 to 100 μm in a tensile mode using a supporting span of 20 mm at a temperature increase rate of 2°C/min from -30°C to 160°C at 1 Hz.

A fluorine-containing copolymer solution obtained by dissolving the fluorine-containing copolymer in N-methyl-2-pyrrolidone (NMP) so that the concentration was 10 to 20 mass% was casted on a glass plate, dried at 100 °C for 12 hours, then dried under vacuum at 100 °C for 12 hours, and the obtained film with a thickness of 50 to 100 μm was cut into a length of 30 mm and a width of 5 mm so as to prepare the sample used for the measurement.

<Viscosity>

The viscosity of the composition was measured using a B-type viscometer (LV-DV2T, manufactured by Brookfield) with rotor No. SC4-21 at a temperature of 25°C and a rotation speed of 20 rpm, and the measured value at 10 minutes after the start of the measurement was employed as the viscosity. The viscosity of the positive electrode mixture was measured using a B-type viscometer (LV-DV2T, manufactured by Brookfield) with rotor No. LV-4 at a temperature of 25°C and a rotation speed of 6 rpm, and the measured value at 10 minutes after the start of the measurement was employed as the viscosity.

<Stability of Positive Electrode Mixture>

The viscosity (η0) of the mixture freshly prepared and the viscosity (ηn) of the mixture at 24 hours after the preparation were measured, and the amount of viscosity change (Xn) was determined by the following equation.

$$Xn = \eta n/\eta 0 \times 100[\%]$$

Based on the determined amount of viscosity change (Xn), evaluation was made according to the following criteria.

Good : Xn is 200% or less.
Average : Xn is more than 200% and 300% or less.
Poor : Xn is more than 300%.

With the use of a positive electrode mixture exhibiting an amount of viscosity change (Xn) of 200% or less, a positive electrode having good characteristics can be produced. With the use of a positive electrode mixture exhibiting an amount of viscosity change (Xn) of more than 200% and 300% or less, there is a disadvantage such as the failure to form a positive electrode mixture layer having a smooth surface. A positive electrode mixture exhibiting an amount of viscosity change (Xn) of more than 300% is difficult to apply.

<Density of Positive Electrode Mixture Layer>

A double-coated positive electrode structure obtained by pressing using a roll pressing machine was cut to prepare a test specimen, and the mass and area of the test specimen were measured. The density of the positive electrode mixture layer was calculated from the masses of the test specimen and positive electrode current collector, the area of the test specimen, and the thickness of the positive electrode mixture layer which was measured with a micrometer gauge.

<Coating Resistance>

The positive electrode mixture was applied to a PET film using a doctor blade and then dried. The surface

resistance of the resulting coating was measured. For the measurement, Loresta-GP (manufactured by Mitsubishi Chemical Analytech Co., Ltd.) was used (this measurement was conducted according to JIS K 7194).

<Adhesion between Positive Electrode Mixture Layer and Current Collector>

A single-coated positive electrode structure obtained by pressing using a roll pressing machine was cut to prepare a test specimen with a size of 1.2 cm × 7.0 cm. The electrode side of the test specimen was fixed to a movable jig with a double-sided tape, and then a tape was attached to the surface of the positive electrode current collector. The tape was pulled at an angle of 90 degrees and a speed of 100 mm/minute, and the stress (N/cm) was measured with Autograph. The load cell used in Autograph was one with a capacity of 50 N.

<Positive Electrode Flexibility>

A double-coated positive electrode structure obtained by pressing using a roll pressing machine was cut to prepare a test specimen with a size of 2 cm × 20 cm.

A cylindrical mandrel bending tester (manufactured by Allgood Co., Ltd.) was used. A 3-mm-diameter mandrel was set on the tester, to which the test specimen was fixed by sandwiching it between the clamps of the main body of the tester. After that, the roller was moved close to the test specimen, and the handle was rotated by 180° at a uniform speed over 1 to 2 seconds. The positive electrode mixture layer was then visually observed and evaluated according to the following criteria.

Good: No cracking was found.
Average: Cracking was found, but fracture of the positive electrode mixture layer was not found.
Poor: The positive electrode mixture layer was fractured.

<Spring-Back>

A double-coated positive electrode structure obtained by pressing using a roll pressing machine was punched by using a hand punch of Φ13 mm size to prepare a test specimen, and the mass and area of the test specimen were measured. The density of the positive electrode mixture layer was calculated from the masses of the test specimen and positive electrode current collector, the area of the test specimen, and the thickness of the positive electrode mixture layer which was measured with a micrometer gauge, and the calculated density was defined as density ($D_0$). The same test specimen was dried with a vacuum dryer at 120°C for 12 hours, after which the density of the positive electrode mixture layer was calculated in the same manner as above. The calculated density was defined as ($D_n$). The spring-back ratio ($Y_n$) was determined from the determined values using the following equation. A higher spring-back ratio is preferred because it means that the positive electrode mixture layer undergoes a smaller decrease in density when heat-treated.

$$Y_n = D_n/D_0 \times 100\ (\%)$$

In Examples and Comparative Examples, the following polymers were used.

<Fluorine-Containing Copolymer (A)>

(A-1): Fluorine-containing copolymer containing VdF unit and TFE unit

$$\text{VdF/TFE} = 81/19\ (\text{mol\%})$$

Weight-average molecular weight: 1230000
Melting point: 128°C
Storage elastic modulus at 30°C: 510 MPa
Storage elastic modulus at 60°C: 270 MPa
(A-2): Fluorine-containing copolymer containing VdF unit, TFE unit, and 4-pentenoic acid unit

$$VdF/TFE = 62/38\ (mol\%)$$

Content of 4-pentenoic acid unit: 0.5 mol%
Weight-average molecular weight: 930000
Melting point: 148°C
Storage elastic modulus at 30°C: 450 MPa
Storage elastic modulus at 60°C: 190 MPa
(A-3): Fluorine-containing copolymer containing VdF unit and HFP unit

$$VdF/HFP = 95/5\ (mol\%)$$

Weight-average molecular weight: 700000
Melting point: 135°C
Storage elastic modulus at 30°C: 320 MPa
Storage elastic modulus at 60°C: 155 MPa
(A-4): Fluorine-containing copolymer containing VdF unit, PMVE unit and acrylic acid unit

$$VdF/PMVE/acrylic\ acid = 97.1/1.9/1.0\ (mol\%)$$

Weight-average molecular weight: 1070000
Melting point: 147°C

<PVdF (B)>

(B-1): VdF homopolymer
Weight-average molecular weight: 780000
Melting point: 162°C
(B-2): PVdF containing acrylic acid unit
Content of acrylic acid unit: 1.0 mol%
Weight-average molecular weight: 1100000
Melting point: 161°C
(B-3): VdF homopolymer
Weight-average molecular weight: 1820000
Melting point: 167°C

In Examples and Comparative Examples, the following positive electrode active materials were used.

NMC811: $LiNi_{0.8}Mn_{0.1}Co_{0.1}O_2$
NCA: $LiNi_{0.82}Co_{0.15}Al_{0.03}O_2$
NMC622: $LiNi_{0.6}Mn_{0.2}Co_{0.2}O_2$
LCO: $LiCoO_2$

In Examples and Comparative Examples, the following single-walled carbon nanotube was used.

Single-walled carbon nanotube (trade name: "TUBALL BATT SWCNT", manufactured by OCSiAl)
Average outer diameter: 1.6 ± 0.4 nm
Length: 5 μm or more
Average G/D ratio: 86.5 ± 7.1

In the Examples and Comparative Examples, the following multi-walled carbon nanotube was used.

Average outer diameter: 11 nm ± 4 nm
Length: 5 μm or more

Average G/D ratio: 1.3

Example 1

(Preparation of Composition)

0.4 kg of single-walled carbon nanotubes, 98.6 kg of N-methyl-2-pyrrolidone (NMP), and 1 kg of fluorine-containing copolymer (A-1) were mixed together in a 100-liter tank using an overhead stirrer having a rotation speed of 75 rpm and a homogenizer having an output power of 30 kW. The amount of energy applied for homogeneous mixing was 0.2 kWh per kg of the mixture. The resulting mixture was processed with a high-pressure homogenizer (the mixture was passed through the homogenizer 10 times at a pressure of 700 bar). After the homogenization, the suspension was collected and filtered through a 50-μm-mesh filter to prepare 100 kg of a composition containing 0.4 mass% of the single-walled carbon nanotubes. The optical density (the light absorption by the composition containing 0.001 mass% of the single-walled carbon nanotubes at a wavelength of 500 nm) was 0.51 absorbance unit, and the viscosity was 750 mPa·s, and these parameters indicated that the quality required of a composition for an electrochemical device was achieved.

(Preparation of Positive Electrode Mixture)

The obtained composition was placed in a 1 L vessel so that the content of the single-walled carbon nanotubes was as shown in Table 1. After that, fluorine-containing copolymer (A-1) dissolved in NMP and PVdF (B-1) dissolved in NMP were added and mixed with the composition so that the mass ratio, fluorine-containing copolymer (A)/PVdF (B), and the content of the binder were as shown in Table 2. Thus, a solution was obtained. The solution obtained, NMC811, and acetylene black were mixed using a stirring device to obtain a liquid mixture. NMP was added and mixed with the obtained liquid mixture to prepare a positive electrode mixture having a solids concentration of 71 mass%. The compositional features of the prepared positive electrode mixture are shown in Table 1.

(Fabrication of Positive Electrode Structure)

The positive electrode mixture obtained was applied uniformly to one side of a positive electrode current collector (a 20-μm-thick aluminum foil) and dried at 120°C for 60 minutes to fully evaporate NMP. After that, pressing was performed by applying a pressure of 10 t using a roll pressing machine, and thus a positive electrode structure was fabricated. The amount of the applied positive electrode mixture was 22.5 mg/cm$^2$, and the density of the electrode mixture layer was 3.6 g/cm$^3$.

Additionally, the positive electrode mixture obtained was applied uniformly to both sides of a positive electrode current collector (a 20-μm-thick aluminum foil) and dried at 120°C for 60 minutes to fully evaporate NMP. After that, pressing was performed by applying a pressure of 10 t using a roll pressing machine, and thus a positive electrode structure was fabricated. The amount of the applied positive electrode on each side was 28.5 mg/cm$^2$, and the density of the electrode mixture layer was 3.6 g/cm$^3$.

The positive electrode structure obtained was evaluated by the methods described above. The results are shown in Table 1.

(Fabrication of Negative Electrode Structure)

Using an artificial graphite powder as a negative electrode active material, an aqueous emulsion of sodium carboxyl methylcellulose (a concentration of 1 mass% of sodium carboxy methylcellulose) as a thickener, and an aqueous dispersion of styrene-butadiene rubber (a concentration of 50 mass% of styrene-butadiene rubber) as a binder, the active material, the thickener, and the binder were mixed in a solid content ratio of 97.6/1.2/1.2 (mass% ratio) in a water solvent into a slurry form so as to prepare a negative electrode mixture slurry. The negative electrode mixture slurry was applied uniformly to a copper foil having a thickness of 20μm. After drying it, the compression molding was performed using a pressing machine, and thus a negative electrode was fabricated.

(Fabrication of a lithium ion secondary battery)

The positive electrode (positive electrode structure) and the negative electrode produced as described above, and a polyethylene separator were stacked in the order of the negative electrode, the separator, and the positive electrode to produce a battery element.

This battery element was inserted into a bag made of a laminate film coated both sides of an aluminum sheet (40μm thick) with a resin layer while the terminals of the positive electrode and the negative electrode were protruded.

Then, the bag was filled with an electrolytic solution (obtained by dissolving $LiPF_6$ at a concentration of 1 mol/liter in a solvent obtained by mixing ethylene carbonate and ethyl methyl carbonate at a volume ratio of 3/7) of 1.2g respectively, and vacuum sealed so as to produce a sheet-like lithium ion secondary battery.

<Output characteristic>

The above produced secondary battery was subjected to constant current-constant voltage charge (hereinafter, referred to as CC/CV charge) (0.1 C cut off) to 4.2 V at a current corresponding to 0.2 C at 25°C, then discharged to 3 V at a constant current of 0.2 C. This process was counted as one cycle. The initial discharge capacity was determined from the discharge capacity of the third cycle. Here, 1.0 C means a current value required for discharging the reference capacity of a battery in an hour. For example, 0.2 C indicates a 1/5 current value thereof. The battery after the evaluation of initial discharge capacity was charged at 25°C and a constant current of 0.2 C, then then discharged to 3 V at a constant current of 5.0 C. The ratio of 5.0 C discharge capacity to the initial discharge capacity was determined, which was regarded as the 5.0 C discharge capacity ratio (%).

(5.0 C discharge capacity)/(0.2 C initial discharge capacity)×100=5.0 C discharge capacity ratio (%)

The results calculated by regarding the value of Comparative Example 1 as 1 are shown in Table 1 and Table 3.

<Cycle Characteristic>

The above produced secondary battery was subjected to CC/CV charge (0.1 C cut off) to 4.2 V at a current corresponding to 1.0 C at 25°C, then discharged to 3 V at a constant current of 1.0 C. This process was counted as one cycle. The initial discharge capacity was determined from the discharge capacity. The cycle was again repeated, and the discharge capacity after 300 cycles was measured. The ratio of the discharge capacity after 300 cycles to the initial discharge capacity was determined, which was regarded as the capacity retention ratio(%).

(Discharge capacity after 300 cycles)/(1.0 C initial discharge capacity)×100=capacity retention ratio(%)

The results calculated by regarding the value of Comparative Example 1 as 1 are shown in Table 1 and Table 3.

<60°C Storage Characteristic>

The above produced secondary battery was subjected to CC/CV charge (0.1 C cut off) again to 4.2 V, then stored at a temperature as high as 60°C for 7 days. Next, the battery was discharged to 3 V at 0.2 C and 25°C, and the remaining capacity after high-temperature storage was measured. Thereby, the ratio of the remaining capacity to the initial discharge capacity was determined, which was regarded as a storage capacity retention ratio (%).

(Remaining capacity)÷(initial discharge capacity)×100=storage capacity retention ratio (%)

The results calculated by regarding the value of Comparative Example 1 as 1 are shown in Table 1 and Table 3.

Examples 2 to 11

A positive electrode mixture was prepared in the same manner as in Example 1, except that the types of the fluorine-containing copolymer (A) and PVdF (B), the compositional features of the binder, and the compositional features of the positive electrode mixture were changed as shown in Table 1. The positive electrode mixture obtained was used and applied in the same amount as in Example 1 to fabricate a positive electrode structure comprising a positive electrode mixture layer having the same density as that of Example 1. The positive electrode structure was evaluated in the same

manner as in Example 1. The results are shown in Table 1.

Comparative Example 1

(Preparation of Positive Electrode Mixture)

The fluorine-containing copolymer (A-1) and PVdF (B-1) were dissolved in N-methyl-2-pyrrolidone (NMP) to prepare a solution containing binders in the mass ratio (fluorine-containing copolymer (A-1)/PVdF (B-1)) shown in Table 1. The obtained solution, NMC811, and acetylene black were mixed using a stirring device to obtain a liquid mixture. NMP was further added and mixed with the obtained liquid mixture to prepare a positive electrode mixture having a solids concentration of 71 mass%. The compositional features of the positive electrode mixture obtained are shown in Table 1.

(Fabrication of Positive Electrode Structure)

A positive electrode structure was fabricated in the same manner as in Example 1, except that the positive electrode mixture obtained as above was used. The positive electrode structure was evaluated in the same manner as in Example 1. The results are shown in Table 1.

Comparative Example 2

A positive electrode mixture was prepared and a positive electrode structure was fabricated in the same manner as in Comparative Example 1, except that the PVdF (B-1) was used alone instead of the combination of the fluorine-containing copolymer (A-1) and PVdF (B-1). The positive electrode structure was evaluated in the same manner as in Example 1. The results are shown in Table 1.

[Table 1]

Table 1

| | | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|---|
| Compositional features of composition | | | | | | | | | | | | | | |
| Fluorine-containing copolymer (A) | | A-1 | A-1 | A-1 | A-2 | A-3 | A-1 | A-1 | A-2 | A-2 | A-1 | A-1 | Not applicable | Not applicable |
| Content of fluorine-containing copolymer (A) | wt% | 1.0 | 1.0 | 1.0 | 1.0 | 1.0 | 1.0 | 1.0 | 1.0 | 1.0 | 1.0 | 1.0 | Not applicable | Not applicable |
| Content of single-walled carbon nanotubes | wt% | 0.4 | 0.4 | 0.4 | 0.4 | 0.4 | 0.4 | 0.4 | 0.4 | 0.4 | 0.4 | 0.4 | Not applicable | Not applicable |
| Viscosity of composition | mPa·s | 750 | 750 | 750 | 930 | 710 | 750 | 750 | 930 | 930 | 750 | 750 | Not applicable | Not applicable |
| Compositional features of binder in positive electrode mixture | | | | | | | | | | | | | | |
| Fluorine-containing copolymer (A) | | A-1 | A-1 | A-1 | A-2 | A-3 | A-1 | A-1 | A-2 | A-2 | A-1 | A-1 | A-1 | Not applicable |
| PVdF(B) | | B-1 | B-1 | B-2 | B-2 | B-1 | B-1 | Not applicable | Not applicable | B-1 | B-3 | B-1 | B-1 | B-1 |
| Mass ratio (fluorine-containing copolymer (A)/ PVdF (B)) | wt% | 20/80 | 15/85 | 20/80 | 20/80 | 10/90 | 20/80 | 100/0 | 100/0 | 20/80 | 35/65 | 20/80 | 20/80 | 0/100 |
| Compositional features of positive electrode mixture | | | | | | | | | | | | | | |

(continued)

| | | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|---|
| Positive electrode active material | | NMC811 | NMC811 | NMC811 | NMC811 | NMC811 | NMC811 | NMC811 | NMC811 | NMC811 | NMC811 | NMC811 | NMC811 | NMC811 |
| Content of positive electrode active material | Parts | 100 | 100 | 100 | 100 | 100 | 100 | 100 | 100 | 100 | 100 | 100 | 100 | 100 |
| Content of acetylene black | Parts | 1.40 | 1.45 | 1.40 | 1.45 | 1.45 | 1.45 | 1.40 | 1.40 | 0.41 | 0.41 | 0 | 1.50 | 1.50 |
| Content of single-walled carbon nanotubes | Parts | 0.10 | 0.05 | 0.10 | 0.05 | 0.05 | 0.05 | 0.10 | 0.10 | 0.08 | 0.08 | 0.08 | 0 | 0 |
| Content of binder | Parts | 1.5 | 1.5 | 1.0 | 1.5 | 1.5 | 0.8 | 1.5 | 1.5 | 1.0 | 1.0 | 1.0 | 1.5 | 1.5 |
| Properties of positive electrode structure | | | | | | | | | | | | | | |
| Coating resistance | Ω·cm | 2.5 | 4.6 | 3.3 | 4.6 | 4.0 | 3.6 | 9.8 | 10.3 | 2.2 | 3.3 | 3.0 | 43.0 | 40.5 |
| Adhesion between positive electrode mixture layer and current collector | N/cm | 0.36 | 0.15 | 0.58 | 0.30 | 0.10 | 0.13 | 0.14 | 0.49 | 0.25 | 0.14 | 0.21 | 0.04 | 0.12 |
| Positive electrode flexibility | ϕ3mm | Good | Good | Good | Good | Good | Good | Good | Good | Good | Good | Good | Good | Poor |
| Spring-back | % | 98.9 | 98.4 | 98.9 | 98.9 | 98.6 | 98.4 | 98.5 | 98.9 | 98.7 | 98.5 | 98.5 | 94.6 | 94.3 |
| Battery characteristics | | | | | | | | | | | | | | |

(continued)

| | | | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|---|---|
| | Output characteristic: Discharge capacity ratio (5.0 C/ 0.2 C) | % | 3.67 | 2.79 | 3.50 | 2.76 | 2.78 | 2.72 | 3.33 | 3.44 | 3.19 | 3.22 | 2.67 | 1.00 | 0.97 |
| | Cycle characteristic: Capacity retention ratio (300 cycles) | % | 1.44 | 1.41 | 1.46 | 1.40 | 1.37 | 1.36 | 1.41 | 1.41 | 1.44 | 1.44 | 1.39 | 1.00 | 0.97 |
| | 60°C storage characteristic: Storage capacity retention ratio (7 days) | % | 1.19 | 1.14 | 1.20 | 1.12 | 1.14 | 1.14 | 1.20 | 1.21 | 1.20 | 1.21 | 1.18 | 1.00 | 0.96 |

The results shown in Table 1 for Examples demonstrated that the use of single-walled carbon nanotube and a specific binder can provide a positive electrode structure exhibiting a sufficiently low coating resistance, superior in flexibility, and resistant to spring-back while ensuring sufficient adhesion between the positive electrode mixture layer and the current collector.

For example, in Example 2 where the single-walled carbon nanotube was used in a relatively small amount, the use of the single-walled carbon nanotube in combination with a specific binder yielded a sufficiently low coating resistance, and at the same time provided both high adhesion between the positive electrode mixture layer and the current collector and high flexibility of the positive electrode structure and sufficiently prevented the spring-back of the positive electrode mixture layer.

In Example 6, although the amount of the binder used was smaller than that in Comparative Example 2, the use of the single-walled carbon nanotube in combination with the specific binder yielded a sufficiently low coating resistance, and at the same time provided both high adhesion between the positive electrode mixture layer and the current collector and high flexibility of the positive electrode structure and sufficiently prevented the spring-back of the positive electrode mixture layer.

As demonstrated by the result for Comparative Example 2, when the single-walled carbon nanotube and the specific binder are not used, the resulting positive electrode structure exhibits a high coating resistance, has poor flexibility, and suffers large spring-back although the adhesion between the positive electrode mixture layer and the current collector may be sufficient.

Further, the results shown in Table 1 for Examples demonstrated that the lithium-ion secondary battery comprising the positive electrode structure obtained by using the composition comprising the single-walled carbon nanotube and the specific binder is superior in both output characteristic, cycle characteristic, and 60°C storage characteristic.

As demonstrated by the result for Comparative Example 1, when the specific binder is used but the single-walled carbon nanotube is not used, not only is the coating resistance high, but also high adhesion between the positive electrode mixture layer and the current collector and high flexibility of the positive electrode structure cannot be achieved at the same time, and the resulting positive electrode structure suffers large spring-back. Further, the lithium-ion secondary battery comprising the positive electrode structure did not exhibit a sufficient output characteristic, cycle characteristic, and 60°C storage characteristic.

Example 12

The composition prepared in Example 1 (composition containing 0.4 mass% of single-walled carbon nanotubes) was placed in a 1 L vessel so that the content of the single-walled carbon nanotubes was as shown in Table 2. After that, fluorine-containing copolymer (A-1) dissolved in NMP and PVdF (B-1) dissolved in NMP were added and mixed with the composition so that the mass ratio, fluorine-containing copolymer (A)/PVdF (B), and the content of the binder were as shown in Table 2. Thus, a solution was obtained. The solution obtained, NCA, and acetylene black were mixed using a stirring device to obtain a liquid mixture. NMP was added and mixed with the obtained liquid mixture to prepare a positive electrode mixture having a solids concentration of 71 mass%. The compositional features of the obtained positive electrode mixture are shown in Table 2. The stability of the obtained positive electrode mixture was evaluated by the method previously described. The result is shown in Table 2.

Example 13

A positive electrode mixture was prepared in the same manner as in Example 12, except that the composition prepared in Example 4 (composition containing 0.4 mass% of single-walled carbon nanotubes) was used and that the types of the fluorine-containing copolymer (A) and PVdF (B) and the compositional features of the positive electrode mixture were changed as shown in Table 2. The compositional features of the obtained positive electrode mixture are shown in Table 2. The stability of the obtained positive electrode mixture was evaluated by the method previously described. The result is shown in Table 2.

Comparative Example 3

A positive electrode mixture was prepared in the same manner as in Comparative Example 2, except that the positive electrode active material was changed to NCA. The compositional features of the obtained positive electrode mixture are shown in Table 2. The stability of the obtained positive electrode mixture was evaluated by the method previously described. The result is shown in Table 2.

[Table 2]

Table 2

| | | | Example 12 | Example 13 | Comparative Example 3 |
|---|---|---|---|---|---|
| Compositional features of composition | | | | | |
| | Fluorine-containing copolymer (A) | | A-1 | A-2 | - |
| | Content of fluorine-containing copolymer (A) | wt% | 1.0 | 1.0 | - |
| | Content of single-walled carbon nanotubes | wt% | 0.4 | 0.4 | - |
| | Viscosity of composition | mPa·s | 750 | 930 | - |
| Compositional features of binder in positive electrode mixture | | | | | |
| | Fluorine-containing copolymer (A) | | A-1 | A-2 | Not applicable |
| | PVdF(B) | | B-1 | B-1 | B-1 |
| | Mass ratio (fluorine-containing copolymer (A)/PVdF (B)) | wt% | 20/80 | 30/70 | 0/100 |
| Compositional features of positive electrode mixture | | | | | |
| | Positive electrode active material | | NCA | NCA | NCA |
| | Content of positive electrode active material | Parts | 100 | 100 | 100 |
| | Content of acetylene black | Parts | 1.40 | 1.40 | 1.40 |
| | Content of single-walled carbon nanotubes | Parts | 0.10 | 0.10 | 0.10 |
| | Content of binder | Parts | 1.5 | 1.5 | 1.5 |
| Properties of positive electrode mixture | | | | | |
| | Viscosity of positive electrode mixture as prepared | mPa·s | 12200 | 14200 | 18000 |
| | Stability of positive electrode mixture | % | Good | Good | Poor |

Examples 14 to 21

A positive electrode mixture was prepared in the same manner as in Example 1, except that the types of the fluorine-containing copolymer (A) and PVdF (B), the types of the positive electrode active material, the compositional features of the binder, the compositional features of the positive electrode mixture, and the viscosity were changed as shown in Table 3. The positive electrode mixture obtained was used and the positive electrode mixture was applied in the same amount as in Example 1 to fabricate a positive electrode structure comprising a positive electrode mixture layer having the same density, and was evaluated in the same manner as in Example 1. The results are shown in Table 3.

Comparative Examples 4 to 7

A positive electrode mixture was prepared and a positive electrode structure was fabricated in the same manner as in Comparative Example 1, except that the types of the positive electrode active material, the compositional features of the binder, the compositional features of the positive electrode mixture, and the viscosity were changed as shown in Table 3. The positive electrode structure was evaluated in the same manner as in Example 1. The results are shown in Table 1.

Table 3

| | | Example 14 | Example 15 | Example 16 | Example 17 | Example 18 | Example 19 | Example 20 | Example 21 | Comparative Example 4 | Comparative Example 5 | Comparative Example 6 | Comparative Example 7 |
|---|---|---|---|---|---|---|---|---|---|---|---|---|---|
| Compositional features of composition | | | | | | | | | | | | | |
| Fluorine-containing copolymer (A) | | A-4 | A-1 | A-1 | A-1 | A-1 | A-1 | A-1 | A-1 | - | - | - | - |
| Content of fluorine-containing copolymer (A) | wt% | 1.75 | 1.75 | 1.75 | 1.75 | 1.75 | 1.75 | 1.75 | 1.00 | - | - | - | - |
| PVDF (B) | | - | - | - | - | - | - | - | B-3 | - | - | - | - |
| Content of PVDF (B) | wt% | - | - | - | - | - | - | - | 4.00 | - | - | - | - |
| Content of single-walled carbon nanotubes | wt% | 0.5 | 0.5 | 0.5 | 0.5 | 0.5 | 0.5 | 0.5 | 0.4 | - | - | - | - |
| Viscosity of composition | mPa·s | 1320 | 1440 | 1440 | 1440 | 1440 | 1440 | 1440 | 1980 | - | - | - | - |
| Compositional features of binder in positive electrode mixture | | | | | | | | | | | | | |
| Fluorine-containing copolymer (A) | | A-4 | A-1 | A-1 | A-1 | A-1 | A-1 | A-1 | A-1 | A-1 | A-1 | A-1 | A-1 |
| PVdF(B) | | B-3 | B-3 | B-3 | B-3 | B-3 | B-3 | B-3 | B-3 | B-1 | B-1 | B-1 | B-1 |
| Mass ratio (fluorine-containing copolymer (A)/PVdF (B)) | wt% | 30/70 | 28/72 | 22/78 | 20/80 | 22/78 | 28/72 | 28/72 | 20/80 | 20/80 | 20/80 | 20/80 | 20/80 |
| Compositional features of positive electrode mixture | | | | | | | | | | | | | |

(continued)

| | | Example 14 | Example 15 | Example 16 | Example 17 | Example 18 | Example 19 | Example 20 | Example 21 | Comparative Example 4 | Comparative Example 5 | Comparative Example 6 | Comparative Example 7 |
|---|---|---|---|---|---|---|---|---|---|---|---|---|---|
| Positive electrode active material | | NMC622 | NMC622 | NMC622 | NMC622 | NMC622 | LCO | LCO | NMC622 | NMC622 | LCO | NMC622 | NMC622 |
| Content of positive electrode active material | Parts | 100 | 100 | 100 | 100 | 100 | 100 | 100 | 100 | 100 | 100 | 100 | 100 |
| Content of acetylene black | Parts | 0.41 | 0.41 | 0.41 | 0.41 | 0.41 | 0.41 | 0.41 | 0.41 | 1.50 | 1.50 | 0.41 | 0.41 |
| Content of single-walled carbon nanotubes | Parts | 0.04 | 0.08 | 0.06 | 0.04 | 0.02 | 0.08 | 0.04 | 0.08 | 0 | 0 | 0 | 0 |
| Content of multi-walled carbon nanotubes | Parts | 0 | 0 | 0 | 0 | 0.41 | 0 | 0 | 0 | 0 | 0 | 0.08 | 0.41 |
| Content of binder | Parts | 1.00 | 1.00 | 1.00 | 1.00 | 1.00 | 1.00 | 1.00 | 1.00 | 1.5 | 1.5 | 1.0 | 1.0 |
| Properties of positive electrode structure | | | | | | | | | | | | | |
| Coating resistance | Ω·cm | 3.8 | 3.2 | 3.3 | 8.8 | 4.6 | 3.8 | 9.1 | 3.0 | 43.0 | 40.5 | 120.0 | 15.0 |
| Adhesion between positive electrode mixture layer and current collector | N/cm | 0.22 | 0.20 | 0.18 | 0.15 | 0.14 | 0.18 | 0.14 | 0.20 | 0.04 | 0.09 | 0.08 | 0.14 |
| Positive electrode flexibility | ϕ 3mm | Good | Good | Good | Good | Good | Good | Good | Good | Good | Good | Good | Good |
| Spring-back | % | 98.2 | 98.9 | 98.7 | 98.6 | 98.8 | 98.6 | 98.4 | 98.8 | 94.6 | 94.3 | 98.5 | 98.5 |

(continued)

| | | Example 14 | Example 15 | Example 16 | Example 17 | Example 18 | Example 19 | Example 20 | Example 21 | Comparative Example 4 | Comparative Example 5 | Comparative Example 6 | Comparative Example 7 |
|---|---|---|---|---|---|---|---|---|---|---|---|---|---|
| Battery characteristics | | | | | | | | | | | | | |
| Output characteristic: Discharge capacity ratio (5.0 C/ 0.2 C) | % | 3.00 | 3.42 | 3.34 | 3.11 | 2.89 | 3.11 | 2.67 | 3.56 | 1.11 | 1.11 | 1.11 | 1.78 |
| Cycle characteristic: Capacity retention ratio (300 cycles) | % | 1.41 | 1.46 | 1.46 | 1.46 | 1.41 | 1.47 | 1.44 | 1.47 | 1.02 | 1.10 | 1.05 | 1.27 |
| 60°C storage characteristic: Storage capacity retention ratio (7 davs) | % | 1.12 | 1.19 | 1.18 | 1.17 | 1.16 | 1.16 | 1.16 | 1.19 | 1.10 | 1.01 | 1.07 | 1.11 |

[Table 3]

The results shown in Table 3 for Examples demonstrated that when the types of the positive electrode active material was changed, a positive electrode structure exhibiting a sufficiently low coating resistance, superior in flexibility, and resistant to spring-back while ensuring sufficient adhesion between the positive electrode mixture layer and the current collector can be obtained. Further, it is demonstrated that the lithium-ion secondary battery comprising the obtained positive electrode structure is superior in both output characteristic, cycle characteristic, and 60°C storage characteristic.

Moreover, the results shown in Table 1 and Table 3 for Examples demonstrated that by using single-walled carbon nanotube and the specific binder, even when the amount of the single-walled carbon nanotube is small, desired effects can be sufficiently obtained, whereas when multi-walled carbon nanotube is used, sufficient adhesion and sufficiently low coating resistance cannot be obtained, and the lithium-ion secondary battery comprising the obtained positive electrode structure cannot exhibit sufficient output characteristic, cycle characteristic, and 60°C storage characteristic (Comparative Example 6). Additionally, when the amount of multi-walled carbon nanotube is increased, sufficiently low coating resistance could not be obtained, and a lithium-ion secondary battery exhibiting sufficient output characteristic cannot be obtained (Comparative Example 7).

## Claims

1. A composition for an electrochemical device, the composition comprising a single-walled carbon nanotube, a binder, and a solvent, wherein the binder contains a fluorine-containing copolymer containing a vinylidene fluoride unit and a fluorinated monomer unit other than the vinylidene fluoride unit, and the content of the vinylidene fluoride unit in the fluorine-containing copolymer is 50.0 mol% or more relative to total monomer units.

2. The composition for an electrochemical device according to claim 1, wherein the average outer diameter of the single-walled carbon nanotube is 2.5 nm or less.

3. The composition for an electrochemical device according to claim 1 or 2, wherein the average G/D ratio of the single-walled carbon nanotube is 2 or more.

4. The composition for an electrochemical device according to any one of claims 1 to 3, wherein the content of the fluorinated monomer unit in the fluorine-containing copolymer is 1.0 mol% or more relative to total monomer units.

5. The composition for an electrochemical device according to any one of claims 1 to 4, wherein the fluorinated monomer unit is at least one selected from the group consisting of a tetrafluoroethylene unit, a chlorotrifluoroethylene unit, a fluoroalkyl vinyl ether unit and a hexafluoropropylene unit.

6. The composition for an electrochemical device according to any one of claims 1 to 5, wherein the fluorinated monomer unit is at least one selected from the group consisting of a tetrafluoroethylene unit and a hexafluoropropylene unit.

7. The composition for an electrochemical device according to any one of claims 1 to 6, wherein the storage elastic modulus (E') as determined by a viscoelasticity analysis at 30°C of the fluorine-containing copolymer is 100 to 1200 MPa and the storage elastic modulus (E') as determined by a viscoelasticity analysis of the fluorine-containing copolymer at 60°C is 50 to 600 MPa.

8. The composition for an electrochemical device according to any one of claims 1 to 7, wherein the binder further contains a polyvinylidene fluoride.

9. The composition for an electrochemical device according to any one of claims 1 to 8, wherein the solvent is at least one selected from the group consisting of N,N-dimethylformamide, N,N-dimethylacetamide, N-methyl-2-pyrrolidone, N-ethyl-2-pyrrolidone, and β-alkoxypropionamides.

10. The composition for an electrochemical device according to any one of claims 1 to 9, for use in formation of an electrode or a separator of an electrochemical device.

11. A positive electrode mixture comprising the composition for an electrochemical device according to any one of claims 1 to 10 and a positive electrode active material.

**12.** The positive electrode mixture according to claim 11, wherein the content of the single-walled carbon nanotube in the positive electrode mixture is 0.001 to 10 parts by mass relative to 100 parts by mass of the positive electrode active material.

**13.** The positive electrode mixture according to claim 11 or 12, wherein the content of the binder in the positive electrode mixture is 0.1 to 5.0 parts by mass relative to 100 parts by mass of the positive electrode active material.

**14.** A positive electrode structure comprising a current collector and a positive electrode mixture layer provided on one or both sides of the current collector, the positive electrode mixture layer being made of the positive electrode mixture according to any one of claims 11 to 13.

**15.** A secondary battery comprising the positive electrode structure according to claim 14.

## INTERNATIONAL SEARCH REPORT

International application No. PCT/JP2020/025721

**A. CLASSIFICATION OF SUBJECT MATTER**

H01M 4/13(2010.01)i; H01M 4/139(2010.01)i; H01M 4/62(2006.01)i; H01G 11/06(2013.01)i; H01G 11/38(2013.01)i; H01G 11/52(2013.01)i; H01M 2/16(2006.01)i

FI: H01M4/62 Z; H01M4/139; H01M2/16 P; H01M4/13; H01G11/06; H01G11/38; H01G11/52

According to International Patent Classification (IPC) or to both national classification and IPC

**B. FIELDS SEARCHED**

Minimum documentation searched (classification system followed by classification symbols)

H01M4/13; H01M4/139; H01M4/62; H01G11/06; H01G11/38; H01G11/52; H01M2/16

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2012-221672 A (HITACHI CHEMICAL INDUSTRY CO., LTD.) 12.11.2012 (2012-11-12) claims, examples | 1-15 |
| Y | WO 2019/087652 A1 (DAIKIN INDUSTRIES, LTD.) 09.05.2019 (2019-05-09) paragraphs [0012]-[0013], [0036]-[0039], [0155], [0156], examples, claims | 1-15 |
| Y | WO 2016/147909 A1 (NEC CORP.) 22.09.2016 (2016-09-22) paragraphs [0031], [0047], claims | 2 |
| Y | JP 2017-84759 A (OSAKA GAS CO., LTD.) 18.05.2017 (2017-05-18) claims, examples | 2-3 |
| X<br>Y | JP 2017-50465 A (SUMITOMO ELECTRIC INDUSTRIES, LTD.) 09.03.2017 (2017-03-09) claims, paragraph [0029], examples | 1-2, 4-6, 10-11, 14<br>3 |
| A | JP 2013-20769 A (TEIJIN LTD.) 31.01.2013 (2013-01-31) paragraph [0064] | 1-2, 4-6, 10-11, 14 |

☐ Further documents are listed in the continuation of Box C. ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 18 September 2020 (18.09.2020) | 29 September 2020 (29.09.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/025721

| Patent Documents referred in the Report | Publication Date | Patent Family | Publication Date |
|---|---|---|---|
| JP 2012-221672 A | 12 Nov. 2012 | (Family: none) | |
| WO 2019/087652 A1 | 09 May 2019 | TW 201923003 A<br>examples, claims | |
| WO 2016/147909 A1 | 22 Sep. 2016 | US 2018/0105425 A1<br>paragraphs [0050], [0066], claims<br>EP 3272708 A1<br>CN 107428539 A | |
| JP 2017-84759 A | 18 May 2017 | (Family: none) | |
| JP 2017-50465 A | 09 Mar. 2017 | (Family: none) | |
| JP 2013-20769 A | 31 Jan. 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018146865 A
- EP 3147919 A